# EUROPEAN PATENT SPECIFICATION

(11) **EP 4 424 894 B1**
(45) Date of publication and mention of the grant of the patent: **27.05.2026**
(21) Application number: 22887166.1
(22) Date of filing: 28.10.2022
(51) Int. Cl.: D04H 1/425, D04H 1/26, D04H 1/4291, D04H 1/541, D04H 1/558, D04H 1/587, D04H 1/732, B27N 3/04, B29B 9/04, B29B 9/06, B29B 9/14, B32B 9/02, B32B 9/06, B29C 70/06, B29C 43/02, B29C 43/34

(54) **FIBER AGGREGATE FOR MOLDING**
FASERAGGREGAT ZUM FORMEN
AGRÉGAT DE FIBRES POUR MOULAGE

(30) Priority: 29.10.2021 JP 2021178087; 08.12.2021 JP 2021199677; 15.12.2021 JP 2021203769; 11.03.2022 JP 2022038684; 21.04.2022 JP 2022070430
(43) Date of publication of application: 04.09.2024
(73) Proprietor: Oji Holdings Corporation, Chuo-ku Tokyo 104-0061 (JP)
(72) Inventor: KAJITA, Keiichi, Tokyo 104-0061 (JP); NAKAYAMA,Yasufumi, Tokyo 104-0061 (JP); ISOGAI, Takuya, Tokyo 104-0061 (JP); FUSHIMI, Hayato, Tokyo 104-0061 (JP); YAMANAKA, Mio, Tokyo 104-0061 (JP); SHISHIDO, Rina, Tokyo 104-0061 (JP); SAKAI, Mizuki, Tokyo 104-0061 (JP); OKUDA, Keiko, Tokyo 104-0061 (JP); SHIRAO, Takeshi, Tokyo 104-0061 (JP); MINAMI, Takehiro, Tokyo 104-0061 (JP)
(74) Representative: Godemeyer Blum Lenze Patentanwälte Partnerschaft mbB - werkpatent
(86) International application number: PCT/JP2022/040341
(87) International publication number: WO 2023/074841

(56) References cited:
- WO-A1-2017/094850
- JP-A- 2017 082 366
- JP-A- 2020 037 710
- JP-A- 2020 519 781
- US-A1- 2002 068 081

## Description

### Technical Field

The present invention relates to a fiber aggregate for molding, and a pre-sheet and a molded article using the same.

### Background Art

Fiber-reinforced plastic molded articles that have been each molded from a nonwoven fabric containing reinforcing fibers such as carbon fiber and glass fiber (also referred to as sheet for fiber-reinforced plastic molded articles) are used in various fields such as sports, leisure goods, aircraft materials, and electronic equipment members. In the fiber-reinforced plastic molded article, a thermosetting resin or a thermoplastic resin is used as a resin serving as a matrix, and in recent years, a fiber-reinforced plastic molded article using the thermoplastic resin has been developed.

As the reinforcing fiber, carbon fiber, glass fiber, aramid fiber and the like are used. Such reinforcing fiber works to increase a strength of the fiber-reinforced plastic molded article. In the case where such shaped products are disposed, the products are subjected to landfill treatment or incineration disposal, but shaped products using the reinforcing fibers as described above have problems that biodegradability after landfill is low, and that at the time of the incineration disposal, a load applied to an incinerator or the like is large.

For this reason, in recent years, it has been proposed to use pulp fibers as the reinforcing fibers (for example, Patent Literatures 1 to 3). In Patent Literatures 1 and 2, a molded product is obtained by making paper from a slurry containing pulp fibers and a thermoplastic resin, and subjecting a sheet-like molded intermediate product which has been molded to heat and pressure molding. In Patent Literature 3, it is proposed to produce a molded product by forming a pellet from a slurry containing pulp fibers and a thermoplastic resin, and injection-molding the pellet.

PTL 4 (JP 2017 082366 A) discloses a sheet for reinforcing an external facing which contains an inorganic reinforced fiber, a natural pulp fiber and a binder component, where a content of the binder component is 25 mass% or less with respect to the total mass of the sheet for reinforcing the external facing. The sheet for reinforcing an external facing can enhance the strength of a molded body and has excellent adhesion to a thermoplastic resin-containing member after molding.

PTL 5 (WO 2017/094850 A1) discloses a sheet for a fiber reinforced plastic molded body that contains a thermoplastic resin and reinforcing fibers derived from organic resources, wherein if the tensile strength in a first direction of the sheet for a fiber reinforced plastic molded body is taken as T, and the tensile strength in a second direction orthogonal to the first direction of the sheet for a fiber reinforced plastic molded body is taken as Y, T/Y is 0.4 to 2.5. The fiber reinforced plastic molded body and a prepress sheet for a fiber reinforced plastic molded body exhibits good moldability even when molding a molded body via deep-drawing molding or the like.

### Citation List

### Patent Literature

PTL 1: JP 06-322699 A
PTL 2: JP 06-346399 A
PTL 3: JP 06-345944 A
PTL 4: JP 2017 082366 A
PTL 5: WO 2017/094850 A1

### Summary of Invention

### Technical Problem

In the molded articles disclosed in Patent Literatures 1 to 3, pulp fibers are used as reinforcing fibers; and accordingly, biodegradability is satisfactory, and an environmental load can be reduced when they are incinerated.

However, there has been a problem that the dispersibility of pulp fibers in a resin is not sufficient, and though the stiffness and strength against bending are enhanced, an impact resistance is not enhanced.

An object of the present invention is to provide a fiber aggregate for a molded article having satisfactory appearance that can provide a molded article which is excellent in stiffness and strength against bending, further is excellent in impact resistance, and has satisfactory appearance. Furthermore, an object of the present invention is also to provide a pre-sheet and a molded article that are obtained from the fiber aggregate for the molded article.

### Solution to Problem

The present inventors have found that a molded article obtained from a fiber aggregate which contains a pulp fiber and a polypropylene fiber as fiber components, contains a specific amount of a specific thermal fusion bonding resin component, and has a ratio of tensile strength in a first direction to tensile strength in a second direction perpendicular to the first direction in a specific range is excellent in stiffness and strength against bending, and further has enhanced impact resistance and satisfactory appearance; and have completed the present invention.

Specifically, the present invention relates to the following <1> to <13>.
<1> A fiber aggregate for molding including a fiber component and a thermal fusion bonding resin component, wherein
   the fiber component contains a pulp fiber and a polypropylene fiber;
   the thermal fusion bonding resin component contains at least one selected from the group consisting of polyethylene and acid-modified polyethylene;
   a content of the thermal fusion bonding resin component in the fiber aggregate is 3% by mass or more and 18% by mass or less; and
   when T represents a tensile strength of the fiber aggregate in a first direction, and Y represents a tensile strength of the fiber aggregate in a second direction perpendicular to the first direction, a T/Y ratio is 0.5 or larger and 1.5 or smaller.
<2> The fiber aggregate for molding according to <1>, wherein the polypropylene fiber contains a polypropylene fiber having an average fiber diameter of 1 µm or larger and 16 µm or smaller and a polypropylene fiber having an average fiber diameter of larger than 16 µm and 50 µm or smaller.
<3> The fiber aggregate for molding according to <1> or <2>, wherein a fiber length of the polypropylene fiber is 0.1 mm or longer and 50 mm or shorter.
<4> The fiber aggregate for molding according to any one of <1> to <3>, wherein a bulk specific gravity is 0.04 g/mL or larger and smaller than 0.15 g/mL.
<5> The fiber aggregate for molding according to any one of <1> to <3>, wherein a bulk specific gravity is 0.15 g/mL or larger and 0. 50 g/mL or smaller.
<6> The fiber aggregate for molding according to any one of <1> to <5>, wherein a content of the pulp fiber in the fiber aggregate is 10% by mass or more and 90% by mass or less.
<7> A pre-sheet including the fiber aggregate for molding according to any one of <1> to <6>, and a fibrous cellulose-containing layer laminated on the fiber aggregate for molding.
<8> A molded article formed by molding of the fiber aggregate according to any one of <1> to <6>.
<9> The molded article according to <8>, wherein the molded article is selected from the group consisting of a hot-press molded article, an injection molded article, a compression molded article, a hand lay-up molded article, a wet vacuum molded article, and a molded article by a vacuum impregnation method (VaRTM molding), of the fiber aggregate for molding.
<10> The molded article according to any one of <8> or <9>, wherein a density is 0.8 g/cm³ or larger and 1.5 g/cm³ or smaller.
<11> The molded article according to any one of <8> to <10>, wherein a thickness is 2mm or thicker.
<12> The molded article according to any one of <8> to <11>, wherein a flexural modulus is 2.5 GPa or larger as measured in accordance with JIS K7171: 2016.
<13> The molded article according to any one of <8> to <12>, wherein a Charpy impact strength measured in accordance with JIS K7111-1:2012 is 2.0 kJ/m² or larger.

### Advantageous Effects of Invention

According to the present invention, it is possible to provide a fiber aggregate that is for a molded article having satisfactory appearance, and that can provide a molded article which is excellent in stiffness and strength against bending, further is excellent in impact resistance, and has satisfactory appearance. Furthermore, according to the present invention, it is possible to provide a pre-sheet and a molded article that are obtained from the fiber aggregate for the molded article.

### Brief Description of Drawing

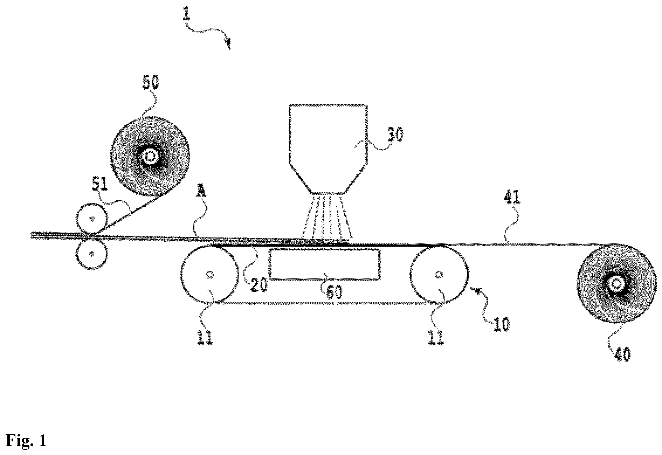

[Fig. 1] Fig. 1 is a schematic view showing a web forming apparatus that is used in a production method in producing a fiber aggregate for molding of the present embodiment.

### Description of Embodiments

### [Fiber aggregate for molding]

A fiber aggregate for molding of the present embodiment (hereinafter, also simply referred to as "fiber aggregate") includes a fiber component and a thermal fusion bonding resin component, wherein the fiber component contains a pulp fiber and a polypropylene fiber; the thermal fusion bonding resin component contains at least one selected from the group consisting of polyethylene and acid-modified polyethylene; a content of the thermal fusion bonding resin component in the fiber aggregate is 3% by mass or more and 18% by mass or less; and when T represents a tensile strength of the fiber aggregate in a first direction, and Y represents a tensile strength of the fiber aggregate in a second direction perpendicular to the first direction, a T/Y ratio is 0.5 or larger and 1.5 or smaller.

According to the fiber aggregate for molding of the present embodiment, a molded article excellent in stiffness and strength against bending and impact resistance can be obtained. Furthermore, the fiber aggregate for molding and the molded article which are excellent in appearance can be obtained.

The detailed reason why the above effect is obtained is not clear, but a part of the reason is considered as follows.

Presumably due to the T/Y which has been set to 0.5 or larger and 1.5 or smaller, the fibers constituting the fiber aggregate are extremely uniformly mixed, and accordingly, the impact resistance is also enhanced as well as the stiffness and strength against bending. In addition, because not only the pulp fiber and polypropylene fiber as the fiber components but also the specific thermal fusion bonding resin component is contained in a specific amount, the pulp fibers are uniformly dispersed in the molded article when the fiber aggregate for molding has been formed into the molded article, and a fiber molded article excellent in the appearance is obtained, and also the molded article has been obtained which is excellent in the stiffness and strength against bending, the impact resistance and the appearance.

The present invention will be described in detail below.

### [Fiber component]

The fiber aggregate for molding of the present embodiment contains a fiber component, wherein the fiber component contains a pulp fiber and a polypropylene fiber.

### (Pulp fiber)

The pulp fiber available for the fiber aggregate of the present embodiment is not particularly limited in a production method, a type and the like. For example, the pulp fiber may be chemical pulp such as kraft pulps of a broad-leaved tree and/or a conifer; mechanical pulp such as SGP, RGP, BCTMP and CTMP; waste paper pulp such as deinked pulp; and non-wood pulps of kenaf, jute, bagasse, bamboo, straw, hemp and the like. Chlorine-free pulp such as ECF pulp and TCF pulp can be used as well.

Among the above pulp fiber, a kraft pulp fiber, particularly, a kraft pulp fiber of the conifer (NBKP) having a long fiber length are preferably used, because of being more excellent in the stiffness and strength against bending, and the impact resistance, of the molded article obtained from the fiber aggregate.

An average fiber length of the pulp fiber is preferably 0.1 mm or longer and 50 mm or shorter, is more preferably 0.5 mm or longer, and is further preferably 1 mm or longer, and is more preferably 10 mm or shorter, is further preferably 5 mm or shorter, and is still further preferably 2.5 mm or shorter, from the viewpoint of enhancement of the stiffness and strength against bending, and the impact resistance, of the molded article, from the viewpoint of the ease of production of the fiber aggregate, and from the viewpoint of enhancement of the appearances of the fiber aggregate and the molded article.

The average fiber length of the pulp fiber is measured by a method described in Examples.

An average fiber width of the pulp fiber is preferably 1 µm or larger and 150 µm or smaller, is more preferably 5 µm or larger, is further preferably 10 µm or larger, and is still further preferably 15 µm or larger, and is more preferably 100 µm or smaller, is further preferably 80 µm or smaller, and is still further preferably 50 µm or smaller, from the viewpoint of enhancement of the stiffness and strength against bending, and the impact resistance, from the viewpoint of the ease of production of the fiber aggregate, and from the viewpoint of enhancement of the appearances of the fiber aggregate and the molded article.

The average fiber width of the pulp fiber is measured by a method described in Examples.

In the case where the fiber aggregate of the present embodiment is formed with the use of an air-laid method, the pulp fiber can be a form of defibrated dry pulp, for example.

It is preferable that the pulp fiber is unbeaten pulp fiber, from the viewpoint of enhancement of the impact resistance.

**In** order that the molded article develops the impact resistance, it is necessary that the pulp fiber is appropriately pulled out from the resin, when an impact has been applied, and for this purpose, it is preferable that the pulp fiber is the unbeaten pulp in which a ratio of fine fiber is low.

From the above described viewpoint, the ratio of fine fiber in the pulp fiber is preferably 50% or smaller, is more preferably 30% or smaller, and is further preferably 20% or smaller; and a lower limit is not particularly limited.

The ratio of fine fiber in the pulp fiber is measured by a method described in Examples.

The content of the pulp fiber in the fiber aggregate is preferably 10% by mass or more, from the viewpoint of the enhancement of the stiffness and strength against bending and the impact resistance, from the viewpoint of the ease of the production of the fiber aggregate, and from the viewpoint of the enhancement of the appearances of the fiber aggregate and the molded article; is more preferably 30% by mass or more and is further preferably 45% by mass or more, from the viewpoint of the productivity and ease of the production; and is still further preferably 50% by mass or more, and is particularly preferably 55% by mass or more, from the viewpoint of the degree of biomass conversion. The content is preferably 90% by mass or less, is more preferably 85% by mass or less, and is further preferably 75% by mass or less, from the viewpoint of the obtainment of the molded article.

When the content of the pulp fiber is within the above range, the stiffness and strength against bending and the impact resistance are enhanced by an effect of reinforcement by the pulp fiber, which is preferable. When the content of the pulp is within the above range, the deterioration of the appearance of the fiber aggregate due to the thermal shrinkage of the resin is suppressed, which is preferable. When the content of the pulp fiber is within the above range, the moldability by the thermal fusion bonding at the time of molding is excellent, which is preferable.

The content of the pulp fiber in the fiber component is preferably 15% by mass or more and 95% by mass or less, is more preferably 20% by mass or more, is further preferably 50% by mass or more, is still further preferably 55% by mass or more, is particularly preferably 60% by mass or more, and is more preferably 90% by mass or less, and is further preferably 80% by mass or less, from the viewpoint of the enhancement of the stiffness and strength against bending and the impact resistance, from the viewpoint of the ease of the production of the fiber aggregate, and from the viewpoint of the enhancement of the appearances of the fiber aggregate and the molded article.

### (Polypropylene fiber)

The fiber aggregate for molding of the present embodiment includes polypropylene fiber as the fiber component.

The polypropylene fiber is not completely melted in the fiber aggregate, and exists in a fibrous state.

A fiber length of the polypropylene fiber is preferably 0.1 mm or longer and 50 mm or shorter, is more preferably 1.0 mm or longer, is further preferably 2.0 mm or longer, and is still further preferably 3.0 mm or longer, and is more preferably 20 mm or shorter, and is further preferably 10 mm or shorter, from the viewpoint of obtainment of a uniform fiber aggregate, from the viewpoint of the enhancement of the stiffness and strength against bending and the impact resistance, of the molded article, from the viewpoint of the ease of the production of the fiber aggregate, and from the viewpoint of the enhancement of the appearances of the fiber aggregate and the molded article.

The fiber length of the polypropylene fiber is measured by a method described in Examples.

A fiber diameter of the polypropylene fiber is preferably 0.1 µm or larger and 100 µm or smaller, is more preferably 1 µm or larger, and is further preferably 5 µm or larger, and is more preferably 80 µm or smaller, and is further preferably 50 µm or smaller, from the viewpoint of the obtainment of the uniform fiber aggregate, from the viewpoint of the enhancement of the stiffness and strength against bending and the impact resistance, of the molded article, from the viewpoint of the ease of production of the fiber aggregate, and from the viewpoint of the enhancement of the appearances of the fiber aggregate and the molded article.

From the above described viewpoints, it is preferable that the polypropylene fiber contains a polypropylene fiber having an average fiber diameter of 1 µm or larger and 16 µm or smaller (hereinafter, also referred to as "polypropylene fiber A"), and a polypropylene fiber having an average fiber diameter of larger than 16 µm and 50 µm or smaller (hereinafter, also referred to as "polypropylene fiber B"). In this case, it is preferable to use two types of polypropylene fibers in combination, which have different average fiber diameters. As described above, when two types of polypropylene fibers are used in combination, which have different average fiber diameters, the ease of production of the fiber aggregate is enhanced, which is preferable. The impact resistance is enhanced, which is preferable, although the reason is not clear.

The average fiber diameter of the polypropylene fiber (polypropylene fiber A) having an average fiber diameter of 1 µm or larger and 16 µm or smaller is preferably 2 µm or larger, is more preferably 3 µm or larger, and is further preferably 5 µm or larger, and is preferably 15 µm or smaller, is more preferably 13.5 µm or smaller, and is further preferably 12 µm or smaller.

The polypropylene fiber having an average fiber diameter of 1 µm or larger and 16 µm or smaller is also preferably a core portion of a core-sheath fiber which will be described later.

The average fiber diameter of the polypropylene fiber (polypropylene fiber B) having an average fiber diameter of larger than 16 µm and 50 µm or smaller is preferably 20 µm or larger, is more preferably 24 µm or larger, and is preferably 45 µm or smaller, is more preferably 40 µm or smaller, and is further preferably 35 µm or smaller.

When the polypropylene fiber A and the polypropylene fiber B are used in combination, a mass ratio of the polypropylene fiber A to the polypropylene fiber B (polypropylene fiber A / polypropylene fiber B) in the fiber aggregate is preferably 5/95 or larger and 70/30 or smaller, is more preferably 10/90 or larger, and is more preferably 60/40 or smaller, is further preferably 50/50 or smaller, and still further preferably 40/60 or smaller.

The fiber diameter of the polypropylene fiber is measured by a method described in Examples.

The polypropylene fiber may be a composite fiber which is composed of two or more resins, and examples thereof include split fiber, sea-island fiber, core-sheath fiber, and laminated fiber; and among the fibers, the core-sheath fiber is preferable from the viewpoint of the obtainment of the molded article which is excellent in the stiffness and strength against bending and in the impact resistance. In the case of the core-sheath fiber, the fiber which has a concentric cross-sectional structure or an eccentric cross-sectional structure is used, but the fiber which has the concentric cross-sectional structure is preferable. When the fiber which has the concentric cross-sectional structure is used, a more uniform fiber aggregate can be obtained, which is preferable.

In the case of the above core-sheath fiber, it is preferable that the core is the polypropylene fiber. In the case of the sea-island fiber, it is preferable that the island portion is the polypropylene fiber.

For example, the core-sheath fiber is preferably a core-sheath fiber in which the core portion is the polypropylene fiber and a sheath portion is the thermal fusion bonding fiber; it is more preferable that the sheath portion is at least one selected from the group consisting of polyethylene and acid-modified polyethylene; and it is further preferable that the sheath is polyethylene. Similarly, it is preferable for the sea-island fiber that the island portion is the polypropylene fiber and the sea portion is the thermal fusion bonding fiber. It is more preferable that the sea portion is at least one selected from the group consisting of the polyethylene and the acid-modified polyethylene. It is further preferable that the sea portion is the polyethylene.

The fineness of the polypropylene fiber is preferably 0.01 dtex or larger, is more preferably 0.1 dtex or larger, and is further preferably 1 dtex or larger, and is preferably 100 dtex or smaller, is more preferably 50 dtex or smaller, and is further preferably 10 dtex or smaller, from the viewpoint of the obtainment of the uniform fiber aggregate, from the viewpoint of the enhancement of the stiffness and strength against bending and the impact resistance, of the molded article, from the viewpoint of the ease of the production of the fiber aggregate, and from the viewpoint of the enhancement of the appearances of the fiber aggregate and the molded article.

A content of the polypropylene fiber in the fiber aggregate is preferably 90% by mass or less, from the viewpoint of the enhancement of the stiffness and strength against bending, and the impact resistance, from the viewpoint of the ease of the production of the fiber aggregate, and from the viewpoint of the enhancement of the appearances of the fiber aggregate and the molded article; is more preferably 70% by mass or less, and further preferably 55% by mass or less, from the viewpoint of the productivity and the ease of the production; and is still further preferably 50% by mass or less, and is particularly preferably 45% by mass or less, from the viewpoint of a degree of biomass conversion. The content is preferably 10% by mass or more, is more preferably 15% by mass or more, and is further preferably 25% by mass or more, from the viewpoint of the obtainment of the molded article.

In the case where two or more types of polypropylene fibers are used, the above content means a total content of the polypropylene fibers.

The content of the polypropylene fiber in the fiber component is preferably 5% by mass or more and 85% by mass or less, is more preferably 10% by mass or more, and is further preferably 20% by mass or more, and is more preferably 80% by mass or less, is further preferably 50% by mass or less, is still further preferably 45% by mass or less, and is particularly preferably 40% by mass or less, from the viewpoint of the enhancement of the stiffness and strength against bending and the impact resistance, from the viewpoint of the ease of the production of the fiber aggregate, and from the viewpoint of the enhancement of the appearances of the fiber aggregate and the molded article.

A content of the fiber component in the fiber aggregate is preferably 82% by mass or more, and is more preferably 85% by mass or more, and is preferably 97% by mass or less, and is more preferably 95% by mass or less, from the viewpoint of the enhancement of the stiffness and strength against bending, and the impact resistance, from the viewpoint of the ease of the production of the fiber aggregate, and from the viewpoint of the enhancement of the appearances of the fiber aggregate and the molded article.

### [Thermal fusion bonding resin component]

The fiber aggregate of the present embodiment includes a thermal fusion bonding resin component. Here, the thermal fusion bonding resin component is a resin having a melting point lower than that of the polypropylene fiber. A melting point of the polypropylene fiber is 160 to 165°C, and accordingly, a melting point of the thermal fusion bonding resin component is 150°C or lower, is preferably 140°C or lower, is more preferably 130°C or lower, and is further preferably 120°C or lower. The melting point of the thermal fusion bonding resin component is preferably 80°C or higher, is more preferably 90°C or higher, and is further preferably 95°C or higher.

The thermal fusion bonding resin component can employ any of fibers, powders, granules and pellets. Here, the fibrous thermal fusion bonding resin component does not correspond to the above described fiber component, and is the thermal fusion bonding resin component. In the case where the thermal fusion bonding resin component is fibrous, it is also preferable that the thermal fusion bonding resin component is, for example, the sheath portion of the core-sheath fiber or the sea portion of the sea-island fiber.

The content of the thermal fusion bonding resin component in the fiber aggregate is 3% by mass or more and 18% by mass or less, is preferably 4% by mass or more, is more preferably 5% by mass or more, and is further preferably 6% by mass or more, and is preferably 16% by mass or less, is more preferably 15% by mass or less, and is further preferably 12% by mass or less, from the viewpoint of the enhancement of the stiffness and strength against bending, and the impact resistance, from the viewpoint of the ease of the production of the fiber aggregate, and from the viewpoint of the enhancement of the appearances of the fiber aggregate and the molded article.

When the content of the thermal fusion bonding resin component is small, it is difficult to form the fiber aggregate, and when the content of the thermal fusion bonding resin component is large, the appearances of the fiber aggregate and the molded article obtained from the fiber aggregate become poor due to the thermal shrinkage.

The thermal fusion bonding resin component includes at least one selected from the group consisting of the polyethylene and the acid-modified polyethylene.

It is preferable that an acid-modifying component to be used for the acid modification of the acid-modified polyethylene is an unsaturated carboxylic acid component. The unsaturated carboxylic acid component is a component derived from an unsaturated carboxylic acid and an acid anhydride thereof. Examples of the unsaturated carboxylic acid include acrylic acid, methacrylic acid, maleic acid, maleic anhydride, itaconic acid, itaconic anhydride, fumaric acid and crotonic acid. Among the acids, it is preferable for the unsaturated carboxylic acid component to be at least one selected from the group consisting of acrylic acid, methacrylic acid, maleic acid and maleic anhydride, and is particularly preferable to be at least one selected from the group consisting of the maleic acid and maleic anhydride. A polyolefin which has been modified with at least one of the maleic acid and maleic anhydride is also referred to as a maleic acid-modified polyolefin.

The acid-modified polyethylene is preferably maleic acid-modified polyethylene. **In** the acid-modified polyethylene, at least a part may be acid-modified.

When the acid-modified polyethylene is contained in the thermal fusion bonding resin component, there is a tendency that a bending strength is enhanced, which is preferable; and when the polyethylene is contained, there is a tendency that the impact strength is enhanced, which is preferable.

The thermal fusion bonding resin component may be used alone, or in combination of two or more types thereof.

A total content of the polyethylene and the acid-modified polyethylene in the thermal fusion bonding resin component is preferably 50% by mass or more, is more preferably 70% by mass or more, and is further preferably 90% by mass or more, and is 100% by mass or less, and is particularly preferably 100% by mass.

### [Resin A]

The fiber aggregate is not limited to the above described embodiment which contains the fiber component and the thermal fusion bonding resin component, and may be an embodiment which contains pulp fiber and a resin A. The resin A contains the above described polypropylene fiber and thermal fusion bonding resin component.

Examples of the component of the resin A include polyolefin, polyvinyl chloride, polystyrene, ABS, acrylonitrile styrene, a polyester, an acrylic resin, polyamide, polyacetal, a polycarbonate, a polybutylene succinate, and polylactic acid. The resin A may employ a binder component described in [other components], and resins exemplified in the filler and the papermaking chemicals, which will be described below; or the thermal fusion bonding adhesive described in [method for producing fiber aggregate], and resins exemplified in the binder component.

In the present invention, the resin A may employ any form of fibers, powders, granules and pellets.

Preferred examples of the fiber of the resin A include polyolefin fiber, polyvinyl chloride fiber, polyester fiber, acrylic fiber, polyamide fiber, polycarbonate fiber, and polylactic acid fiber.

Preferred examples of the components of the powders, granules and pellets of the resin A include polyolefin, polyvinyl chloride, polyester, acrylic, polyamide, polycarbonate, polylactic acid, polystyrene, ABS (acrylonitrile-butadiene-styrene), acrylonitrile-styrene, polyacetal, and polybutylene succinate. In particular, preferred examples of the powder of the resin A include a polystyrene powder, an ABS powder, an acrylonitrile-styrene powder, a polyacetal powder, and a polybutylene succinate powder.

The resin A can be used alone, or in combination of two or more types thereof. For example, the resin A may employ two materials of polylactic acid fiber and polybutylene succinate powder, in combination.

### [Other components]

The fiber aggregate of the present embodiment may contain other components in addition to the above described fiber component and thermal fusion bonding resin component. Examples of the other components include a binder component.

When the binder component is contained, a content of the binder component is preferably 0.1% by mass or more and 45% by mass or less, is more preferably 0.3% by mass or more and 30% by mass or less, is further preferably 0.4% by mass or more and 20% by mass or less, and is still further preferably 0.5% by mass or more and 10% by mass or less, with respect to the total mass of the fiber aggregate. Due to the content of the binder component, which has been set within the above range, the handleability and the like at the time of the production of the molded article can be enhanced.

Usable examples of the binder component include various starches, casein, sodium alginate, hydroxyethyl cellulose, carboxymethyl cellulose, an acrylic resin, a styrene-(meth)acrylate copolymer resin, a urethane resin, and a polyvinyl alcohol (PVA) resin, various starches, a cellulose derivative, sodium polyacrylate, polyacrylamide, polyvinylpyrrolidone, a copolymer of acrylamide, an acrylic acid ester and a methacrylic acid ester, an alkali salt of styrene-maleic anhydride copolymer, an alkali salt of isobutylene-maleic anhydride copolymer, a polyvinyl acetate resin, a styrene-butadiene copolymer, a vinyl chloride-vinyl acetate copolymer, an ethylene-vinyl acetate copolymer, and a copolymer of styrene, butadiene and a (meth)acrylic acid ester.

The fiber aggregate may further contain a filler and a papermaking chemical.

Examples of the filler include: mineral pigments such as kaolin, calcined kaolin, calcium carbonate, calcium sulfate, barium sulfate, titanium dioxide, talc, zinc oxide, alumina, magnesium carbonate, magnesium oxide, silica, white carbon, bentonite, zeolite, sericite and smectite; and organic pigments such as a polystyrene resin, a urea resin, a melamine resin, an acrylic resin and a vinylidene chloride resin.

Examples of the papermaking chemicals include a paper strengthening additive, a retention aid, a freeness improving agent, dye, a fluorescent brightener, a pH adjusting agent, a defoaming agent, a pitch control agent and a slime control agent. Examples of the paper strengthening additive include polyacrylamide. Furthermore, a wet paper strengthening additive can also be used in combination, and examples thereof include a polyamide resin, a melamine-formaldehyde resin, a urea-formaldehyde resin, a polyamide-polyamine-epichlorohydrin resin, and a polyethyleneimine resin.

When the other components are contained, a content of the other components except for the fiber component and the thermal fusion bonding resin component is preferably 0.1% by mass or more and 45% by mass or less, is more preferably 0.3% by mass or more and 30% by mass or less, is further preferably 0.4% by mass or more and 20% by mass or less, and is still further preferably 0.5% by mass or more and 10% by mass or less, with respect to the total mass of the fiber aggregate.

### [Characteristics of fiber aggregate]

When T represents a tensile strength of the fiber aggregate in a first direction, and Y represents a tensile strength of the fiber aggregate in a second direction perpendicular to the first direction, T/Y is 0.5 or larger and 1.5 or smaller. Due to the T/Y being set to the above range, not only the stiffness and strength against bending but also the impact resistance is enhanced.

The T/Y is preferably 0.60 or larger, is more preferably 0.70 or larger, is further preferably 0.80 or larger, and is still further preferably 0.85 or larger, and is preferably 1.45 or smaller, is more preferably 1.40 or smaller, and is further preferably 1.35 or smaller.

The first direction of the fiber aggregate is arbitrary one direction in the planar direction of the fiber aggregate. However, when the fibers included in the fiber aggregate are oriented in any direction of the planar direction, the orientation direction is defined as the first direction. When the flow direction in the production process of the fiber aggregate is known, the flow direction is set as the first direction. When the flow direction in the production process of the fiber aggregate is known, the flow direction in the production process is referred to as a first direction (MD direction), and the flow direction in the obtained fiber aggregate is referred to as a T direction in some cases.

The second direction of the fiber aggregate is one direction in the planar direction of the fiber aggregate, and is a direction perpendicular to the first direction. When the flow direction in the production process of the fiber aggregate is known, the direction perpendicular to the flow direction in the production process is referred to as the second direction (CD direction), and the second direction in the obtained fiber aggregate is referred to as a Y direction in some cases.

The tensile strengths of the fiber aggregate in the first direction and the second direction are measured in accordance with JIS P8113: 2006. The tensile strength in each direction is a value obtained by measurement of a strip piece of 15±0.1 mm × 180±1 mm pulled at a speed of 20±5 mm/min, with the use of Tensilon manufactured by A&D Company, Limited as a tensile tester.

The fiber aggregate of the present embodiment is obtained by mixture of at least a fiber component and a thermal fusion bonding resin component, and then by dry papermaking; and is preferably a sheet form. The fiber aggregate may be a sheet (hereinafter, also referred to as a fiber aggregate bulky sheet) which is obtained by a pressing process of a cotton-like fiber aggregate (hereinafter, also referred to as a cotton-like fiber aggregate) after the dry papermaking has been performed, or may be a sheet (hereinafter, also referred to as a fiber aggregate dense sheet) obtained by a further pressing process of the bulky sheet. **In** other words, there may be various bulk specific gravities (densities).

The bulk specific gravity of the fiber aggregate bulky sheet is preferably 0.04 g/mL or larger, is more preferably 0.05 g/mL or larger, and is further preferably 0.06 g/mL or larger, and is preferably smaller than 0.15 g/mL, is more preferably 0.12 g/mL or smaller, and is further preferably 0.10 g/mL or smaller.

The bulk specific gravity of the fiber aggregate dense sheet is preferably 0.15 g/mL or larger, is more preferably 0.16 g/mL or larger, and further preferably 0.18 g/mL or larger, and is preferably smaller than 0.80 g/mL, is more preferably 0. 60 g/mL or smaller, and is further preferably 0.50 g/mL or smaller.

The bulk specific gravity of the fiber aggregate is measured by a method described in Examples.

Here, the fiber aggregate may be any form of a fiber aggregate bulky sheet or a fiber aggregate dense sheet, but is preferably a bulky sheet, from the viewpoint of the energy load at the time of the production of the fiber aggregate.

**In** the viewpoint of transportability and handleability, the fiber aggregate dense sheet is preferable.

Furthermore, in the case where the fiber aggregate is converted into a composition for molding, which has been melted and kneaded, or is injection molded, the fiber aggregate dense sheet is preferable because of having a denser structure and being excellent in handleability when the sheet of the fiber aggregate is supplied.

### [Method for producing fiber aggregate]

Next, a method for producing the fiber aggregate will be described.

The method for producing the fiber aggregate of the present embodiment is not particularly limited, and may be any production method as long as desired T/Y can be obtained; and examples thereof include an air-laid method which is a dry production method, and a water flow entanglement method which is a wet production method. Among the methods, in order to obtain the desired T/Y, the dry production method is preferable, from the viewpoint of suppression of the orientation of the fibers, and specifically, the production method by the air-laid method is preferable.

It is preferable that the step of producing the fiber aggregate includes a step of mixing the fiber components in air and depositing the mixture. Specifically, it is preferable that the fiber aggregate of the present embodiment is a dry nonwoven fabric. The thermal fusion bonding resin component may be blended with the above fiber component, as fibers; and may be added as particles, and in the case where the fiber aggregate has two or more layers, may be added between the layers.

When the fiber aggregate is produced by the dry papermaking method, it is preferable to adopt the air-laid method. The air-laid method is a method of discharging an air current containing raw material fibers and the like, in which fiber components defibrated in air are uniformly mixed in an air current, onto a mesh-like endless belt provided with a suction box on the lower side, and forming an air-laid web. Specifically, the air-laid method is a method including a step of mixing a pulp fiber and at least a polypropylene fiber in air, and depositing the mixture. In the air-laid method, the above operation may be repeated two or more times as needed.

The web which has been formed by the above method is formed into a sheet by a fiber bonding step as will be described below. Examples of the fiber bonding step include a method of passing a needle through the web in a direction perpendicular to the web surface such as a needle punching method, thereby entangling the fiber components with each other, and forming a sheet. Such a bonding step is preferably used in combination with a web forming method by a carding method. The fiber bonding step can adopt a step of fusion-bonding the thermal fusion bonding adhesive by heating, which has been blended in the dry-process web, and bonding the raw material fibers with each other (thermal bonding method); a step of applying an adhesive to the obtained dry-process web, and bonding the raw material fibers (chemical bonding method); and alternatively, a method (multi-bonding method) of combining the thermal bonding method and the chemical bonding method.

In the thermal bonding method, it is preferable to heat the web at a temperature higher than a melting point of the thermal fusion bonding adhesive, by 20°C or higher. Examples of the heating treatment include hot air treatment, and hot pressure treatment at low pressure after hot air treatment.

In the case where the thermal bonding method or the multi-bonding method is adopted, it is preferable that a particulate or fibrous thermal fusion bonding adhesive is used. The thermal fusion bonding adhesive may be the above described thermal fusion bonding resin component or binder component.

As the particulate thermal fusion bonding adhesive, particles of thermal fusion bonding resins such as polyethylene, polypropylene, polyester, low-melting point polyethylene terephthalate, low-melting point polyamide, low-melting point polylactic acid and polybutylene succinate are used.

As fibrous thermal fusion bonding adhesives, polyesters such as low-melting point polyethylene terephthalate, low-melting point polylactic acid, polybutylene succinate (PBS) and polyethylene terephthalate (PET), and resins of low-melting point polyamide, an acrylic resin and vinyl acetate (PVAc) are used.

As the thermal fusion bonding synthetic fiber, a thermal fusion bonding composite synthetic fiber having a core-sheath type structure can also be preferably used which is obtained by combination of two types of resins having different melting points, and in which only the surface of the fiber melts. The thermal fusion bonding composite synthetic fiber having the core-sheath type structure has a structure in which a sheath formed of a resin having a low melting point is formed on the outer periphery of a core formed of a resin having a high melting point. Specifically, such a form is included that two types of resins having different melting points are combined (PET/PET composite fiber, PE/PET composite fiber, PP/PET composite fiber, PE/PP composite fiber, and PVAc/PET composite resin).

In the case where the chemical bonding method is used for bonding of the fibers, it is preferable that a binder component is added for fixing the fibers to each other. The binder component can be appropriately selected as needed. Examples thereof which can be used include: solution type binders such as starch, casein, sodium alginate, hydroxyethyl cellulose, sodium salt of carboxymethyl cellulose, polyvinyl alcohol (PVA) and sodium polyacrylate; and an emulsion type binder such as polyacrylate, an acryl-styrene copolymer, polyvinyl acetate, an ethylene-vinyl acetate copolymer, an acrylonitrile-butadiene copolymer, a methyl methacrylate-butadiene copolymer, a urea-melamine resin, and a styrene-butadiene copolymer resin. It is also preferable to use the above described binder component. As the above binder, various forms can be used such as fibers, powders, granules, solutions and emulsions; and two or more types thereof can also be used in combination.

In the case where the fiber aggregate is produced by the dry papermaking method, the fiber aggregate may be subjected to calendering process after the heating treatment, as needed, for the purpose of enhancing the smoothness, and control of the density. The calendering process can arbitrarily control the density of the sheet, by pressurizing the sheet with a metal roll or a resin roll. It is possible to obtain a highly smooth and highly dense sheet, by setting a temperature of the rolls for calendering process to an arbitrary temperature, and heating and pressurizing the sheet.

In the fiber aggregate which has been produced by the dry papermaking method as described above, each of the fibers constituting the fiber aggregate is randomly oriented to three dimensions of a longitudinal direction, a width direction and a thickness direction. Because of this, in the present embodiment, the tensile strength of the fiber aggregate in the first direction and the tensile strength of the fiber aggregate in the second direction become approximately the same values. In other words, in the present embodiment, the fiber aggregate is obtained which is excellent in isotropy in the planar direction.

When the fiber aggregate is made into paper by the dry papermaking method or the wet papermaking method, it becomes possible to obtain a fiber aggregate and a molded article having water permeability and air permeability, by adjusting the heating conditions and density at the time of papermaking. In the case of a fiber aggregate or a molded article having water permeability, the fiber aggregate or the molded article can be suitably used for filter applications such as filtration. In the case of a fiber aggregate or a molded article having air permeability, the fiber aggregate or the molded article can be suitably used for a filter application or a mask application.

In the production process of the fiber aggregate, it is also acceptable to produce a laminated sheet by laminating an arbitrary sheet which does not inhibit the moldability, on the fiber aggregate. For example, it is possible to laminate an arbitrary sheet on the surface of the fiber aggregate, or between sheets when the fiber aggregate is laminated. As the arbitrary sheet to be laminated, a sheet such as a tissue or a nonwoven fabric can be used. These arbitrary sheets are laminated for the purpose of enhancing surface properties and enhancement of an interlayer strength, and impartment of other functions.

It is possible to obtain the fiber aggregate bulky sheet and the fiber aggregate dense sheet, by subjecting the above described fiber aggregate to heat and pressure molding by a roll press. A roll press process can arbitrarily control the density of the sheet, by pressurizing the sheet with a metal roll or a resin roll. It is possible to obtain the fiber aggregate bulky sheet or the fiber aggregate dense sheet having an arbitrary density, by setting a temperature and clearance of the rolls for the roll press process to arbitrary values, and heating and pressurizing the sheet.

### [Pre-sheet]

The pre-sheet of the present embodiment is a sheet in which a fibrous cellulose-containing layer is laminated on the above described fiber aggregate.

The fibrous cellulose-containing layer of the present embodiment at least constitutes the top-surface layer of the pre-sheet of the present embodiment. The fibrous cellulose-containing layer of the present embodiment may constitute not only the top-surface layer of the pre-sheet of the present embodiment, but also the bottom-surface layer of the pre-sheet of the present embodiment. In the pre-sheet of the present embodiment, it is preferable that both of the top-surface layer and the bottom-surface layer are fibrous cellulose-containing layers. The fibrous cellulose-containing layers of the top-surface layer and the bottom-surface layer may be the same or different.

The fibrous cellulose-containing layer is clearly distinguished from the previously described fiber aggregate.

The fibrous cellulose-containing layer of the present embodiment is preferably formed by the hot press of a fibrous cellulose-containing sheet.

It is preferable that the fibrous cellulose-containing sheet is a sheet containing first cellulose fibers having fiber widths of 10 µm or larger, and second cellulose fibers having fiber widths of 1000 nm or smaller. In the present specification, the cellulose fibers having the fiber widths of 1000 nm or smaller (second cellulose fibers) are referred to as fine fibrous cellulose in some cases, and the sheet containing the fine fibrous cellulose is referred to as a fine fibrous cellulose-containing sheet in some cases.

It is also preferable that the fibrous cellulose-containing sheet is a sheet containing highly beaten pulp, such as glassine paper.

Hereinafter, the fine fibrous cellulose-containing sheet which is considered to be preferable as the fibrous cellulose-containing sheet is referred to as the sheet of the present embodiment, and the sheet will be specifically described.

The sheet of the present embodiment is satisfactory in adhesiveness to a resin. Specifically, the adhesiveness of the sheet to a resin layer is satisfactory after the resin layer has been laminated on the sheet of the present embodiment and the laminate has been hot pressed (for example, at a press pressure of 0.5 MPa or higher); delamination between the layers does not occur; and the laminated structure is maintained.

The basis weight of the sheet of the present embodiment is preferably 100 g/m² or more, is more preferably 120 g/m² or more, and is further preferably 150 g/m² or more. The basis weight of the sheet of the present embodiment is preferably 300 g/m² or less, is more preferably 250 g/m² or less, and is further preferably 200 g/m² or less. The basis weight of the sheet can be calculated in accordance with, for example, JIS P8124: 2011. The basis weight of the sheet of the present embodiment can be appropriately adjusted, according to the performance which is required for the molded article, and the like. In applications in which a thin molded article or a thin sheet is required, the basis weight of the sheet of the present embodiment may be less than 100 g/m², or may be 40 g/m² or less.

The thickness of the sheet of the present embodiment is preferably 5 µm or thicker, is more preferably 10 µm or thicker, is further preferably 20 µm or thicker, and is particularly preferably 30 µm or thicker. The upper limit of the thickness of the sheet is not particularly limited, and can be, for example, 1000 µm. The thickness of the sheet is measured in accordance with, for example, JIS P8118: 2014.

A density of the sheet of the present embodiment is preferably 0.1 g/cm³ or higher, is more preferably 0.2 g/cm³ or higher, is further preferably 0.3 g/cm³ or higher, is yet more preferably 0.50 g/cm³ or higher, is even more preferably 0.60 g/cm³ or higher, and is particularly preferably 0.65 g/cm³ or higher. The upper limit of the density of the sheet is not particularly limited, but is preferably 5.0 g/cm³ or lower, for example. Here, the density of the sheet is calculated from the values of the basis weight measured in accordance with JIS P8124: 2011, and the thickness of the sheet measured in accordance with JIS P8118: 2014. The density of the sheet may be appropriately adjusted, for example, by subjecting the sheet to a calendering process, according to the performance which is required of the molded article or the sheet.

The sheet of the present embodiment may be a single-layer sheet or a multi-layer sheet. It is preferable that the sheet of the present embodiment is the single-layer sheet. Specifically, it is preferable that both the first cellulose fibers having fiber widths of 10 µm or larger and the second cellulose fibers having fiber widths of 1000 nm or smaller randomly exist, in the single-layer sheet. The sheet of the present embodiment may be a multi-layer sheet in which two or more single-layer sheets are laminated each of which contains both the first cellulose fibers having the fiber widths of 10 µm or larger and the second cellulose fibers having the fiber widths of 1000 nm or smaller. For example, the sheet of the present embodiment may be a multi-layer sheet that includes a first layer containing both the first cellulose fibers having the fiber widths of 10 µm or larger and the second cellulose fibers having the fiber widths of 1000 nm or smaller, and a second layer containing both the first cellulose fibers having fiber widths of 10 µm or larger and the second cellulose fibers having the fiber widths of 1000 nm or smaller. **In** this case, the first layer and the second layer may be the same layer or different layers. The thicknesses and the basis weights of the first layer and the second layer may be each the same or different. **In** other words, the sheet of the present embodiment can be said to be a multi-layer sheet (for example, a two-layer sheet) in which two or more single-layer sheets are laminated.

### (First cellulose fiber)

The sheet of the present embodiment may not contain the first cellulose fiber, but it is preferable that the sheet of the present embodiment contains the first cellulose fiber. Here, it is preferable that the first cellulose fibers are cellulose fibers having the fiber widths of 10 µm or larger. The fiber widths of the first cellulose fibers may be 10 µm or larger, but are preferably 15 µm or larger, are more preferably 20 µm or larger, and are further preferably 25 µm or larger. The fiber widths of the first cellulose fibers are preferably 100 µm or smaller, are more preferably 80 µm or smaller, are further preferably 60 µm or smaller, and are particularly preferably 40 µm or smaller. **In** the present specification, the first cellulose fiber is also referred to as coarse cellulose fibers or pulp.

Details relating to the first cellulose will be described below, in the case where the sheet of the present embodiment contains the first cellulose.

The fiber widths of the first cellulose fibers can be measured with the use of a Kayani fiber length measuring device (model FS-200) manufactured by Kayani Automation Co., Ltd. Here, the fiber widths of the first cellulose fibers are the fiber widths of stem fibers of the cellulose fibers. For example, in the case where the cellulose fibers are fibrillated cellulose fibers, the fiber widths of the first cellulose fibers are not the fiber widths of the fibrillated and branched fibers, but the fiber widths of the stem fibers constituting the main shaft.

It is preferable to use pulp as the fiber raw material of the first cellulose fiber. Examples of the pulp include wood pulp, non-wood pulp and deinked pulp. The wood pulp is not particularly limited, but examples thereof include: chemical pulps such as hardwood kraft pulp (LBKP), softwood kraft pulp (NBKP), sulfite pulp (SP), dissolving pulp (DP), soda pulp (AP), unbleached kraft pulp (UKP), and oxygen-bleached kraft pulp (OKP); semi-chemical pulps such as semi-chemical pulp (SCP) and chemigroundwood pulp (CGP); and mechanical pulps such as ground wood pulp (GP) and thermomechanical pulp (TMP and BCTMP). The non-wood pulp is not particularly limited, but examples thereof include: cotton-based pulps such as cotton linter and cotton lint; and non-wood based pulps such as hemp, wheat straw and bagasse. The deinked pulp is not particularly limited, but examples thereof include a deinked pulp of which the raw material is waste paper. As the first cellulose fiber, one type of the above description may be used alone, or two or more types thereof may be used in combination.

It is preferable that the first cellulose fiber has an ionic substituent. Examples of the ionic substituent can include any one or both of an anionic group and a cationic group. The anionic group is preferably at least one selected from the group consisting of, for example, a phosphorus oxo acid group or a substituent derived from a phosphorus oxo acid group (also simply referred to as a phosphorus oxo acid group in some cases), a carboxy group or a substituent derived from a carboxy group (also simply referred to as a carboxy group in some cases), and a sulfone group or a substituent derived from a sulfone group (also simply referred to as a sulfone group in some cases); is more preferably at least one selected from the group consisting of the phosphorus oxo acid group and the carboxy group; and is particularly preferably the phosphorus oxo acid group. Due to the first cellulose fiber having the ionic substituent as described above, the sheet can suppress, for example, the occurrence of a twist in the sheet production process.

For details of the ionic substituent and the method for introducing the ionic substituent, JP 2021-98870 A can be referred to. Specifically, with respect to the ionic substituent, paragraphs 0031 to 0036 of JP 2021-98870 A can be referred to, and with respect to the method for introducing the ionic substituent, paragraphs 0049 to 0075 of the same publication can be referred to.

The amount of the ionic substituents to be introduced in the first cellulose fiber is preferably 0.3 mmol/g or more per 1 g (mass) of the cellulose fibers, is more preferably 0.4 mmol/g or more, is further preferably 0.5 mmol/g or more, is yet more preferably 0.7 mmol/g or more, and particularly preferably 1.0 mmol/g or more. The amount of the ionic substituents introduced in the first cellulose fiber is preferably 5.20 mmol/g or less per 1 g (mass) of the cellulose fibers, is more preferably 3.65 mmol/g or less, and is further preferably 3.00 mmol/g or less. Here, the unit mmol/g indicates the amount of substituents per 1 g by mass of the first cellulose fibers, when the counter ion of the anionic group is a proton (H⁺), for example. Due to the amount of the ionic substituents to be introduced being set within the above range, it is possible to more effectively suppress the occurrence of the twist in the sheet, in the sheet production process.

The amount of the ionic substituents to be introduced with respect to the first cellulose fibers is measured by a method described in JP 2021-98870 A.

In the case where the first cellulose fiber and the second cellulose fiber are mixed, the fibers are separated and recovered by a centrifugal separation method, and then, the amount of the ionic substituent to be introduced is measured by the previously described method. For the centrifugal separation, the cellulose dispersion in which the first cellulose fiber and the second cellulose fiber are mixed is adjusted to a solid content concentration of 0.2% by mass, and the resultant is centrifuged with the use of a cooling high-speed centrifugal separator (H-2000B, manufactured by Kokusan Co., Ltd.) under conditions of 12000 G and 10 minutes. After that, the obtained precipitated solid is recovered as the first cellulose fiber, and the supernatant is recovered as the second cellulose fiber.

The water retention degree of the first cellulose fiber is preferably 220% or larger, is more preferably 230% or larger, is further preferably 240% or larger, is yet more preferably 250% or larger, and is particularly preferably 280% or larger. The water retention degree of the first cellulose fiber is preferably 600% or smaller, is more preferably 500% or smaller, and is further preferably 400% or smaller. The water retention degree of the first cellulose fiber is a value measured in accordance with J. TAPPI-26. The water retention degree of the first cellulose fiber is a water retention degree of the first cellulose fiber before the sheet is formed, but it is acceptable that the water retention degree of the first cellulose fiber after the sheet has been formed satisfies the above range.

The content of the first cellulose fiber is preferably 10% by mass or more, is more preferably 20% by mass or more, is further preferably 30% by mass or more, is yet more preferably more than 40% by mass, 41% by mass or more, 45% by mass or more, 50% by mass or more, more than 50% by mass, or 55% by mass or more, is even more preferably 60% by mass or more, and is particularly preferably 70% by mass or more, with respect to the total mass of the cellulose fibers contained in the sheet of the present embodiment. The content of the first cellulose fiber is preferably 99% by mass or less, is more preferably 95% by mass or less, is further preferably 90% by mass or less, is yet more preferably 85% by mass or less, and is particularly preferably 80% by mass or less, with respect to the total mass of the cellulose fibers contained in the sheet. The content of the first cellulose fibers may be 0% by mass, with respect to the total mass of the cellulose fibers contained in the sheet of the present embodiment.

### (Second cellulose fiber)

The sheet of the present embodiment contains the second cellulose fiber (fine fibrous cellulose) having a fiber width of 1000 nm or smaller. The fiber width of the second cellulose fiber can be measured, for example, by electron microscopic observation. The second cellulose fiber is, for example, monofilamentous cellulose.

The fiber width of the second cellulose fiber may be 1000 nm or smaller, is preferably 500 nm or smaller, is more preferably 300 nm or smaller, is further preferably 200 nm or smaller, is yet more preferably 100 nm or smaller, is even more preferably 50 nm or smaller, is further more preferably 20 nm or smaller, and is particularly preferably 10 nm or smaller. The sheet of the present embodiment contains the fine fibrous cellulose having such a small fiber width, and as a result, is excellent in mechanical properties even when having been formed into a molded article. Due to the combined use of the second cellulose fiber and the first cellulose fiber (coarse cellulose fiber), the adhesiveness to the resin can be effectively enhanced. In the case where the fine fibrous cellulose having a small fiber width is used in combination with the first cellulose fiber (coarse cellulose fiber) having an ionic substituent, it is possible to suppress the occurrence of the twist in the sheet, in the sheet production process. When the fine fibrous cellulose having the small fiber width is used in combination with the first cellulose fiber having ionic substituents (coarse cellulose fiber), the transparency of the sheet is enhanced.

The fiber width of the second cellulose fiber is measured, for example, with the use of an electron microscope. For the measurement of the fiber width of the second cellulose fiber, paragraphs 0022 to 0024 of JP 2021-98870 A can be referred to.

The fiber length of the second cellulose fiber is not particularly limited, but, for example, is preferably 0.1 µm or longer and 1000 µm or shorter, is more preferably 0.1 µm or longer and 800 µm or shorter, and is further preferably 0.1 µm or longer and 600 µm or shorter. Due to the fiber length being set within the above range, it is possible to suppress the destruction of a crystalline region of the second cellulose fiber. It becomes also possible to control the slurry viscosity of the second cellulose fiber in an appropriate range. The fiber length of the second cellulose fiber can be measured by image analysis, for example, by TEM, SEM or AFM.

It is preferable that the second cellulose fiber has a type I crystal structure. Here, it can be identified that the second cellulose fiber has the type I crystal structure, in a diffraction profile which is obtained from a wide-angle X-ray diffraction photograph using CuKα (λ=1.5418 Å) monochromatized with graphite. Specifically, the type I crystal structure has typical peaks at two positions around 2θ = 14° or larger and 17° or smaller and around 2θ = 22° or larger and 23° or smaller, and can be identified on the basis of the fact.

A ratio of the type I crystal structure existing in the second cellulose fiber is, for example, preferably 30% or larger, is more preferably 40% or larger, and is further preferably 50% or larger. Thereby, a further excellent performance in terms of development of heat resistance and low linear thermal expansion coefficient can be expected. The crystallinity can be determined from a pattern of an X-ray diffraction profile which has been measured, by a conventional method (Seagal et al., Textile Research Journal, vol. 29, p. 786, 1959).

An axial ratio (fiber length / fiber width) of the second cellulose fiber is not particularly limited, but is preferably, for example, 20 or larger and 10000 or smaller, and is more preferably 50 or larger and 1000 or smaller. When the axial ratio is controlled to be not smaller than the above lower limit, it becomes easy to form a sheet containing the second cellulose fiber. When the axial ratio is controlled to be not larger than the above upper limit, for example, when the second cellulose fiber is handled as an aqueous dispersion, handling such as dilution is facilitated, which is preferable in this point.

The second cellulose fiber in the present embodiment has, for example, both a crystalline region and an amorphous region. In particular, the second cellulose fiber having both the crystalline region and the amorphous region and having a high axial ratio is realized by a method for producing fine fibrous cellulose, which will be described below.

It is preferable that the second cellulose fiber in the present embodiment has an ionic substituent. Examples of the ionic substituent include one or both of an anionic group and a cationic group. The anionic group is preferably at least one selected from the group, for example, consisting of a phosphorus oxo acid group or a substituent derived from a phosphorus oxo acid group (also simply referred to as a phosphorus oxo acid group), a carboxy group or a substituent derived from a carboxy group (also simply referred to as a carboxy group), and a sulfone group or a substituent derived from a sulfone group (also simply referred to as a sulfone group); is more preferably at least one selected from the group consisting of the phosphorus oxo acid group and the carboxy group; and is particularly preferably the phosphorus oxo acid group. The phosphorus oxo acid group is the same as the phosphorus oxo acid group which the first cellulose fiber can have. When both the first cellulose fiber and the second cellulose fiber have an ionic substituent, the ionic substituent of the first cellulose fiber and the ionic substituent of the second cellulose fiber may be the same or different, but are preferably the same.

The amount of the ionic substituent introduced with respect to the second cellulose fiber is preferably, for example, 0.1 mmol/g or more per 1 g (mass) of the second cellulose fibers, is more preferably 0.3 mmol/g or more, is further preferably 0.5 mmol/g or more, is yet more preferably 0.7 mmol/g or more, and is particularly preferably 1.0 mmol/g or more. The amount of the ionic substituent to be introduced in the second cellulose fiber is preferably 5.20 mmol/g or less, per 1 g (mass) of the cellulose fibers, is more preferably 3.65 mmol/g or less, and is further preferably 3.00 mmol/g or less. Here, the unit mmol/g indicates the amount of substituents per 1 g by mass of the second cellulose fibers, for example, when the counter ion of the anionic group is a proton (H⁻).

The amount of the ionic substituent introduced with respect to the second cellulose fiber can be measured, for example, by a neutralization titration method. In the case of the measurement by a neutralization titration method, a change in pH is determined while an alkali such as an aqueous solution of sodium hydroxide is added to the obtained slurry containing the second cellulose fiber, and thereby the amount of introduction is measured. A specific method for measuring the amount of the introduced ionic substituent is the same as the method for measuring the amount of the introduced ionic substituent in the first cellulose fiber. When the amount of the ionic substituent introduced in the first cellulose fiber is measured, defibration treatment is performed before the treatment with a strongly acidic ion exchange resin, but when the amount of the ionic substituent introduced in the second cellulose fiber is measured, the defibration treatment may not be performed before the treatment with a strongly acidic ion exchange resin.

A content of the second cellulose fiber is preferably 1% by mass or more, is more preferably 5% by mass or more, is further preferably 10% by mass or more, is yet more preferably 15% by mass or more, and is particularly preferably 20% by mass or more, with respect to the total mass of the cellulose fibers contained in the sheet of the present embodiment. The content of the second cellulose fiber is preferably 90% by mass or less, is more preferably 80% by mass or less, is further preferably 70% by mass or less, is yet more preferably 50% by mass or less, is even more preferably 40% by mass or less, and is particularly preferably 30% by mass or less, with respect to the total mass of the cellulose fibers contained in the sheet. The content of the second cellulose fiber may be 100% by mass, with respect to the total mass of the cellulose fibers contained in the sheet of the present embodiment.

### <Step of producing fine fibrous cellulose>

### <Fiber raw material>

The fine fibrous cellulose is produced from a fiber raw material containing cellulose. The fiber raw material containing cellulose is not particularly limited, and examples thereof include the same fiber raw material as that of the first cellulose fiber.

Among the above pulps, for example, wood pulp and deinked pulp are preferable from the viewpoint of availability. Among the wood pulps, for example, chemical pulp is more preferable, and kraft pulp and sulfite pulp are further preferable, from the viewpoint that a cellulose ratio is high, and a yield of fine fibrous cellulose at the time of defibration treatment is high, and from the viewpoint that fine fibrous cellulose having long fibers is obtained, in which decomposition of cellulose in pulp is low and the axial ratio is high.

As the fiber raw material containing cellulose, it is also possible to use, for example, cellulose contained in ascidians, or bacterial cellulose produced by acetic acid bacteria. It is also possible to employ the fiber which is formed by a linear chain type nitrogen-containing polysaccharide polymer such as chitin or chitosan, in place of the fiber raw material containing cellulose.

### <Step of introducing phosphorus oxo acid group>

In the case where the fine fibrous cellulose has a phosphorus oxo acid group, the step of producing the fine fibrous cellulose includes a step of introducing the phosphorus oxo acid group. The step of introducing the phosphorus oxo acid group is the same step as the step of introducing the phosphorus oxo acid group in the step of producing the first cellulose fiber, and can be referred to paragraphs 0049 to 0062 of JP 2021-98870 A.

### <Step for introducing carboxy group>

In the case where the fine fibrous cellulose has a carboxy group, a step of producing the fine fibrous cellulose includes a step of introducing the carboxy group. The step of introducing the carboxy group is the same step as the step of introducing the carboxy group in the step of producing the first cellulose fiber, and can be referred to paragraphs 0063 to 0067 of JP 2021-98870 A.

### <Cleaning step>, <Acid treatment step> and <Alkali treatment step>

In the method for producing the fine fibrous cellulose in the present embodiment, a cleaning step and an alkali treatment step can be performed for the ionic group-introduced fiber as needed, and for these steps, paragraphs 0068 to 0075 of JP 2021-98870 A can be referred to.

### <Defibration treatment>

The fine fibrous cellulose is obtained by subjecting fibers to defibration treatment in a defibration treatment step. For the defibration treatment step, paragraphs 0076 to 0078 of JP 2021-98870 A can be referred to.

### (Ratio)

A mass ratio of the first cellulose fiber to the second cellulose fiber (first cellulose fiber: second cellulose fiber) is preferably 30:70 to 90:10, is more preferably 40:60 to 90:10, is further preferably 60:40 to 90:10, and is particularly preferably 70:30 to 90:10. The mass ratio of the first cellulose fiber to the second cellulose fiber may be a ratio of the first cellulose fiber: the second cellulose fiber = 0:100. Here, the first cellulose fiber in the sheet can be observed with, for example, a scanning electron microscope (S-3600N, manufactured by Hitachi High-Tech Corporation). The second cellulose fiber can be observed, for example, with a high-resolution field emission scanning electron microscope (S-5200, manufactured by Hitachi, Ltd.). By such observation, the mass ratio may be calculated from the volume ratio of each fiber. However, a mixing ratio of the cellulose fiber in the sheet production process as will be described below is equivalent to the ratio of the first cellulose fiber and the second cellulose fiber in the sheet.

### (Other fibers)

The sheet of the present embodiment may contain other cellulose fibers in addition to the first cellulose fiber and the second cellulose fiber. Examples of the other cellulose fibers include highly beaten pulp which is obtained by beating the first cellulose fiber so that the fiber width becomes larger than 1 µm and smaller than 10 µm. Here, the fiber width of the other fibers is a fiber width of the stem fiber of the cellulose fiber. For example, in the case where the other fiber is fibrillated cellulose fiber, the fiber width of the other fiber is not a fiber width of the fibrillated and branched fiber, but is a fiber width of the stem fiber.

The beating of other cellulose fibers can be performed with the use of, for example, a defibration treatment apparatus. The defibration treatment apparatus is not particularly limited. Examples thereof include a high-speed defibrator, a grinder (millstone type pulverizer), a high-pressure homogenizer, an ultrahigh-pressure homogenizer, Clearmix, a high-pressure collision type pulverizer, a ball mill, a bead mill, a disk type refiner and a conical refiner. Devices for wet pulverization can be appropriately used, such as a twin-screw kneader, a vibration mill, a homomixer under high-speed rotation, an ultrasonic disperser, and a beater.

### (Water-soluble polymer / low molecular weight compound)

The sheet of the present embodiment may further contain a water-soluble polymer. Examples of the water-soluble polymers include: synthetic water-soluble polymers exemplified by a carboxyvinyl polymer, polyvinyl alcohol (PVA), an alkyl methacrylate-acrylic acid copolymer, polyvinylpyrrolidone, sodium polyacrylate, polyethylene glycol, diethylene glycol, triethylene glycol, polyethylene oxide, propylene glycol, dipropylene glycol, polypropylene glycol, isoprene glycol, hexylene glycol, 1,3-butylene glycol, polyacrylamide and the like; thickening polysaccharides exemplified by xanthan gum, guar gum, tamarind gum, carrageenan, locust bean gum, quince seed, alginic acid, pullulan, carrageenan, pectin and the like; cellulose derivatives exemplified by carboxymethyl cellulose, methyl cellulose, hydroxyethyl cellulose and the like; starches exemplified by cationized starch, raw starch, oxidized starch, etherified starch, esterified starch, amylose and the like; glycerins exemplified by polyglycerin and the like; hyaluronic acid, metal salts of hyaluronic acid, and the like. Among these compounds, it is preferable that the water-soluble polymer is the polyvinyl alcohol.

The sheet of the present embodiment may contain a hydrophilic low-molecular-weight compound in place of the water-soluble polymer. Examples of the hydrophilic low-molecular-weight compound include glycerin, diglycerin, erythritol, xylitol, sorbitol, galactitol and mannitol, but are not particularly limited thereto.

A content of the water-soluble polymer or the hydrophilic low-molecular-weight compound in the sheet is preferably 0.1 parts by mass or more, with respect to 100 parts by mass of the whole cellulose fibers, is more preferably 0.5 parts by mass or more, is further preferably 1.0 parts by mass or more, and is particularly preferably 5.0 parts by mass or more. The content of water-soluble polymer is preferably 100 parts by mass or less, with respect to 100 parts by mass of the whole cellulose fibers, is more preferably 50 parts by mass or less, is further preferably 30 parts by mass or less, and is particularly preferably 20 parts by mass or less. Due to the content of the water-soluble polymer or the hydrophilic low-molecular-weight compound being controlled to the above described range, the strength of the sheet can be more effectively enhanced.

### (Paper strengthening additive)

It is preferable that the sheet of the present embodiment further contains a paper strengthening additive. Thereby, it becomes possible to further enhance the strength of the sheet. Examples of the paper strengthening additive include a dry paper strengthening agent and a wet paper strengthening agent. Examples of the dry paper strengthening agent include cationic starch, polyacrylamide (PAM), carboxymethyl cellulose (CMC), and an acrylic resin. Examples of the wet paper strengthening agent include polyamide epihalohydrin, urea, melamine, and thermally cross-linkable polyacrylamide. It is preferable that among these agents, the sheet of the present embodiment contains the polyamine polyamide epihalohydrin; and the polyamine polyamide epihalohydrin and a preferable content of the paper strengthening additive are described in paragraphs 0096 to 0098 of JP 2020-172738 A, which can be referred to.

It is preferable that the sheet of the present embodiment contains both of the polyvinyl alcohol and the polyamine polyamide epihalohydrin. Due to inclusion of both of the compounds, the pre-sheet of the present embodiment has excellent adhesiveness between the fine fibrous cellulose-containing layer and the pulp fiber-containing layer. As a result, the pre-sheet and the molded article of the present embodiment are excellent in mechanical properties, as a result.

### (Arbitrary component)

The sheet of the present embodiment may contain arbitrary components other than the above described components. Examples of the arbitrary components include preservatives, antifoaming agents, lubricants, ultraviolet absorbers, dyes, pigments, stabilizers, surfactants, sizing agents, coagulants, yield enhancing agents, bulking agents, freeness improving agents, pH adjusters, fluorescent brightening agents, pitch control agents, slime control agents, antifoaming agents, water retention agents, and dispersing agents.

A content of the above arbitrary component contained in the sheet of the present embodiment is preferably 50% by mass or less, is more preferably 40% by mass or less, is further preferably 30% by mass or less, is yet more preferably 20% by mass or less, is even more preferably 10% by mass or less, and is particularly preferably 5% by mass or less, with respect to the total mass of the sheet.

### (Resin layer)

A resin layer may be provided on a surface of the fibrous cellulose-containing sheet (preferably the sheet of the present embodiment), which is a surface in contact with the fiber aggregate. It is preferable that the resin layer is a resin layer which is formed by coating (coated resin layer).

The resin layer is a layer which contains a modified polyolefin resin, and is preferably a layer which contains a modified polyolefin resin as a main component. Here, the main component means a component which is contained in an amount of 50% by mass or more with respect to the total mass of the resin layer. A content of the modified polyolefin resin is preferably 60% by mass or more, is more preferably 70% by mass or more, is further preferably 80% by mass or more, and is particularly preferably 90% by mass or more, with respect to the total mass of the resin layer. The content of the modified polyolefin resin may be 100% by mass.

The modified polyolefin resin is obtained by modification of a polyolefin resin. Methods of modifying the polyolefin resin include acid modification, chlorination, and acrylic modification. Among the methods, it is preferable that the modified polyolefin resin is an acid-modified polyolefin resin. In this case, it is preferable that an acid-modifying component is an unsaturated carboxylic acid component. The unsaturated carboxylic acid component is a component derived from an unsaturated carboxylic acid or an anhydride thereof; and examples of the unsaturated carboxylic acid component include acrylic acid, methacrylic acid, maleic acid, maleic anhydride, itaconic acid, itaconic anhydride, fumaric acid and crotonic acid. Among the acids, the unsaturated carboxylic acid component is preferably at least one selected from the group consisting of acrylic acid, methacrylic acid, maleic acid, and maleic anhydride; and is particularly preferably at least one selected from the group consisting of the maleic acid and the maleic anhydride.

The olefin component constituting the modified polyolefin resin includes alkenes having 2 to 6 carbon atoms such as ethylene, propylene, isobutylene, 1-butene, 1-pentene and 1-hexene. The modified polyolefin resin may be a copolymer having two or more of the above olefin components. The modified polyolefin resin may contain other copolymerization components such as vinyl acetate and norbornenes, in addition to the above olefin component.

Among the resins, the modified polyolefin resin is preferably a modified polypropylene resin, is more preferably an acid-modified polypropylene resin, and is further preferably a maleic acid-modified polypropylene resin or a maleic anhydride-modified polypropylene resin.

It is also preferable that the modified polyolefin resin is a chlorinated polyolefin resin. In this case, a chlorine content is preferably 5% by mass or more, and is more preferably 10% by mass or more, with respect to the total mass of the chlorinated polyolefin resin. The chlorine content is preferably 50% by mass or less, with respect to the total mass of the chlorinated polyolefin resin.

It is particularly preferable that the modified polyolefin resin is an acid-modified chlorinated polyolefin resin. Among the resins, it is preferable that the modified polyolefin resin is a maleic anhydride-modified-chlorinated polyolefin resin or a maleic acid-modified-chlorinated polyolefin resin. The acid-modified chlorinated polyolefin resin is used to obtain a laminated sheet having more excellent transparency.

It is preferable that a main chain of the modified polyolefin resin has a graft chain which contains a carboxyl group at the terminal. In the present specification, the graft chain is a group which has a linking group bonded to the main chain of the modified polyolefin resin, and a carboxy group at the terminal of the linking group. It is preferable that the linking group constituting the graft chain is an alkylene group having 1 to 10 carbon atoms. Specifically, in a preferable embodiment of the present invention, the modified polyolefin resin is a graft polymer in which a main chain skeleton is a polyolefin, and a -R-COOH group (in which R represents an alkylene group having 1 to 10 carbon atoms) is grafted to the main chain skeleton.

The modified polyolefin resin may be a modified polyolefin resin soluble in aqueous solvents, but is preferably a modified polyolefin resin soluble in organic solvents. In the case where the modified polyolefin resin is one soluble in aqueous solvents, the resin composition which forms the resin layer containing the modified polyolefin resin contains an organic solvent. The organic solvent used here includes aliphatic organic solvents, alcohols organic solvents, ketones organic solvents, esters organic solvents, ethers organic solvents, aromatic organic solvents, and cyclic alkane organic solvents. Among the solvents, it is preferable that the organic solvent is the aromatic organic solvent or the cyclic alkane organic solvent. Examples of the aromatic organic solvent include benzene, toluene and xylene. Examples of the cyclic alkane organic solvents include cyclohexane, cyclopentane, cyclooctane and methylcyclohexane. When the resin layer is formed from the resin composition containing the organic solvent as described above, a small amount of the organic solvent remains in the resin layer without volatilizing. Therefore, the resin layer may contain an aromatic organic solvent or a cyclic alkane organic solvent.

As the modified polyolefin resin, a commercially available product may be used. Examples of the commercially available product include Hardlen TD-15B produced by Toyobo Co., Ltd., Hardlen F-2MB produced by Toyobo Co., Ltd., and Arrowbase SB-1230N produced by Unitika Ltd. The resin layer may further contain an adhesion aid in addition to the modified polyolefin resin.

### (Method for producing sheet)

The method for producing the sheet according to the present embodiment includes a step of forming the sheet from a slurry which contains the second cellulose fiber having a fiber width of 1000 nm or smaller, and further arbitrarily contains the first cellulose fiber having a fiber width of 10 µm or larger. The method for producing a sheet of the present embodiment will be described below, on the premise that the first cellulose fiber is used.

In the case where the sheet of the present embodiment is a multi-layer sheet that includes a first layer which contains both the first cellulose fiber having the fiber width of 10 µm or larger and the second cellulose fiber having the fiber width of 1000 nm or smaller, and a second layer which contains both the first cellulose fiber having fiber width of 10 µm or larger and the second cellulose fiber having the fiber width of 1000 nm or smaller, it is acceptable to provide a step of forming a first layer (or a second layer) from a slurry which contains the first cellulose fiber having the fiber width of 10 µm or larger and the second cellulose fiber having the fiber width of 1000 nm or smaller, and then forming a second layer (or a first layer) by coating the layer with a slurry which contains the first cellulose fiber having the fiber width of 10 µm or larger and the second cellulose fiber having the fiber width of 1000 nm or smaller. Alternatively, it is also acceptable to form each of the first layer and the second layer from a slurry containing the first cellulose fiber having the fiber width of 10 µm or larger and the second cellulose fiber having the fiber width of 1000 nm or smaller, then stack these layers, and thereby form a multi-layer sheet having the first layer and the second layer.

A concentration of a solid content that is contained in a slurry in which the first cellulose fiber and the second cellulose fiber are dispersed is preferably 10% by mass or lower, and is more preferably 5% by mass or lower. It is preferable that the concentration of the solid content that is contained in the slurry is 0.01% by mass or higher.

Here, the water retention degree of the first cellulose fiber is preferably 220% or larger, is more preferably 230% or larger, and is further preferably 240% or larger. The water retention degree of the first cellulose fiber is preferably 600% or smaller. The water retention degree of the first cellulose fiber is a value measured in accordance with J. TAPPI-26. In the sheet production process of the present embodiment, the first cellulose fiber having the water retention degree of 220% or larger is used, and thereby, a slurry can be obtained in which the fibers are uniformly dispersed. , The agglomeration of the cellulose fibers even in a slurry having a high concentration of cellulose fibers can be suppressed by the use of the first cellulose fiber having the water retention degree of 220% or larger.

### <Papermaking step>

In the case where the slurry containing the first cellulose fiber and the second cellulose fiber is subjected to papermaking, the slurry is subjected to papermaking by a paper machine. The paper machine which is used in the papermaking step is not particularly limited, and examples thereof include: continuous paper machines of a fourdrinier type, a cylinder type, an inclined type and the like; and paper machines for combining a multiple layer of paper sheet, in which these machines are combined. In the papermaking step, a known papermaking method may be adopted such as hand papermaking.

For the papermaking step, paragraphs 0081 to 0086 of JP 2020-158736 A can be referred to.

After the papermaking step, one surface of the obtained sheet may be subjected to calendering process. Alternatively, it is also acceptable to rewet one surface with a rewetting liquid, and then subject the rewet surface to a rewet casting process in which the sheet is pressed against a casting drum.

### <Coating step>

In the step of coating a substrate with a slurry containing the first cellulose fiber and the second cellulose fiber (coating step), a sheet can be obtained, for example, by coating the substrate with the slurry (coating liquid) containing the fibrous cellulose, drying the slurry, and peeling the formed sheet from the substrate. When a coating apparatus and a long substrate are used, the sheet can be continuously produced.

For the coating step, paragraphs 0087 to 0093 of JP 2020-158736 A can be referred to.

In the coating step, the substrate is coated with the slurry so that a finished basis weight of the sheet is preferably 5 g/m² or more and 500 g/m² or less, and is more preferably 10 g/m² or more and 300 g/m² or less. In the coating step, it is also possible to produce a thin film sheet having a basis weight of 30 g /m² or less, for example.

### [Molded article]

Next, the molded article will be described.

The molded article of the present embodiment is a molded article which is molded from the above described fiber aggregate or pre-sheet.

It is also acceptable to work the fiber aggregate into various forms, and then form the work into the molded article. Specifically, the following aspects are exemplified.
(1) Cut material obtained by cutting fiber aggregate
(2) Composition for molding obtained by melting and kneading of fiber aggregate

The composition for molding is obtained by melting and kneading of the above described fiber aggregate.

The composition for molding may be in any form such as a pellet form, a rod form, a tubular form, a sheet form or a film form, but is preferably in a pellet form.

A method for producing the composition for molding is not particularly limited; and the fiber aggregate may be supplied, melted and kneaded, and the method is not particularly limited.

Examples of the apparatus to be used for the melting and kneading include a single-screw extruder, a twin-screw extruder, a kneader, a Banbury mixer, a mixing roll mill, an open roll mill, and a crush mixer. Examples of the method include: supplying, melting and kneading the fiber aggregate, and then subjecting the resultant to
(1) a method of obtaining a pellet-shaped composition for molding of the resin composition, by extruding the melted and kneaded product into a strand shape, and cooling and solidifying the strand;
(2) a method of obtaining a pellet-shaped composition for molding of the resin composition, by cooling and solidifying a melted and kneaded product as it is, or a work after the melted and kneaded product has been stretched into a sheet shape, and crushing the solidified product by a grinder;
(3) a method of obtaining a composition for extrusion molding, by extruding the melted and kneaded product into a rod shape or a cylindrical shape, and cooling the extruded product;
(4) a method of obtaining a composition for sheet-shaped or film-shaped molding, by extruding the melted and kneaded product through a T-die, or
(5) a method of obtaining a composition for a pellet-shaped molding of the resin composition, by cutting the melted and kneaded product immediately after extrusion with a rotary blade in air or in water.

When the fiber aggregate is supplied, melted and kneaded, it is acceptable to melt and knead the fiber aggregate while further supplying the resin A.

The composition for molding of the present embodiment may contain an elastomer together with the above described fiber aggregate.

The elastomer means a substance that has properties of being softened and exhibiting fluidity when the substance is heated, and returning to a rubber state when the substance is cooled. Examples of the elastomer include a polystyrene-based elastomer, an olefin/alkene-based elastomer, a polyvinyl chloride-based elastomer, a polyurethane-based elastomer, a polyester-based elastomer, and a polyamide-based elastomer.

A method for adding the elastomer is not particularly limited, and it is acceptable to supply the elastomer together with the fiber aggregate when the fiber aggregate is melted and kneaded, and to melt and knead the mixture. Alternatively, it is acceptable to powderize the elastomer at the time of production of the fiber aggregate, and mix the powderized elastomer.

In the case where the composition for molding of the present embodiment contains the elastomer, a content of the elastomer is preferably 60% by mass or less, is more preferably 40% by mass or less, is further preferably 30% by mass or less, and is yet more preferably 20% by mass or less, with respect to the total mass of the composition for molding. In the case where the composition for molding contains the elastomer, a content of the elastomer is preferably 0.1% by mass or more, is more preferably 1% by mass or more, and is further preferably 5% by mass or more, with respect to the total mass of the composition for molding.

The molded article can be obtained by working the fiber aggregate and the cut product thereof, the pre-sheet, and the above composition for molding, into an arbitrary shape, according to the targeted shape of the molded product, and the molding method. The fiber aggregate may be used alone, or may be laminated so that the molded article has a desired thickness; and the thickness of the molded article can be adjusted by adjustment of the number of laminated sheets. In the molded article, the pulp fiber is retained in a state of the pulp fiber, and the molded article is a molded article containing the pulp fiber.

The molded article obtained by molding the fiber aggregate is exemplified by the following aspects.
(1) Hot-press molded article of fiber aggregate
(2) Injection molded article of fiber aggregate
(3) Compression molded article of fiber aggregate

As for these molding steps (hot press molding, injection molding, and compression molding), two or more molding steps may be combined, or two or more steps which have been simultaneously performed may be determined as one step. In these molding steps, when a heating temperature, a heating time and a heated portion are controlled, only a part of the polyolefin contained in the fiber molded article can be melted; and in such a case, a molded article having air permeability and water permeability can be obtained.

The molded article obtained by molding the composition for molding is exemplified by the following aspect.

### (4) Molded article obtained by injection molding of composition for molding

The molded article obtained by molding the pre-sheet is exemplified by the following aspect.

### (5) Hot-press molded article of pre-sheet

Hereinafter, (1) to (5) will be described in detail.

In addition to the above described (1) to (5), the molded article may be a hand lay-up molded article obtained by a hand lay-up molding method, a wet vacuum molded article obtained by a wet vacuum molding method, or a molded article obtained by a vacuum impregnation method (VaRTM molding method).

### (1) Hot-press molded article

It is preferable that the molded article is a hot-press molded article which is obtained by a step of hot-press molding the fiber aggregate. Due to the hot press molding, the polyolefin contained in the fiber aggregate is melted, and a molded article can be obtained which is excellent in the stiffness and strength against bending, and in the impact resistance. In the hot press molding, a mixed state is maintained in the fiber aggregate in which the pulp fibers and the polyolefin fibers are uniform and the orientation is suppressed; and a molded article is obtained in which the pulp fibers are extremely uniformly dispersed.

The step of the hot press molding is a step of subjecting the fiber molded article to heat and pressure molding. It is preferable to heat and pressurize the fiber aggregate to 100°C or higher and to 2 MPa or higher.

The heating temperature in the hot-press molding step is preferably 100°C or higher, but is preferably adjusted as appropriate according to a type of polyolefin fiber contained in the fiber aggregate. Specifically, it is preferable to perform heating within a range of ±20°C of a melting point of the polyolefin fiber contained in the fiber aggregate. Due to the heating within such a temperature range, it is possible to suppress thermal decomposition of the pulp fibers contained in the fiber aggregate (decomposition of hemicellulose). As a result, a molded article obtained is more excellent in the stiffness and strength against bending and in the impact resistance.

The pressure condition in the hot-press molding step is preferably 2 MPa or higher, is more preferably 5 MPa or higher, and is preferably 25 MPa or lower, is more preferably 20 MPa or lower, and is further preferably 15 MPa or lower, from the viewpoint of obtainment of a molded article excellent in the stiffness and strength against bending, and in the impact resistance, and from the viewpoint of reduction of the energy load.

It is preferable to set a heating rate until a desired holding temperature is reached, to 3°C/min or higher and 30°C/min or lower, a holding time period under desired heating and pressurizing conditions, to 1 minute or longer and 30 minutes or shorter, and, subsequently, a cooling rate to 3°C/min or higher and 20°C/min or lower, while maintaining the pressure until the temperature is reached at which the molded article is taken out.

The hot-press molding step may further include a preliminary pressing step before the above heating and pressurizing conditions. It is also preferable to perform the preliminary pressing at a lower pressure under desired heating conditions, and then perform the hot press step at an increased pressure.

Among various existing methods of the hot press molding, preferable methods of the hot press molding include an autoclave method which is often used when a molded article member of a large aircraft or the like is produced, and a die press method of which the process is relatively simple. The autoclave method is preferable from the viewpoint of obtainment of a high-quality molded article with few voids. On the other hand, it is preferable to use a die press method of molding a material with the use of a metal mold, from the viewpoint of the amount of energy to be used in the equipment and a molding process, simplification of a jig for molding, auxiliary materials and the like to be used, and a degree of freedom of a molding pressure and temperature; and these methods can be selected according to the application.

In the step of the hot press molding, the hot press molding may be performed two or more times, for the purpose of preventing defects such as breakage which occurs due to insufficient elongation of the pulp fibers and the polyolefin fibers. Thereby, it becomes possible to obtain a molded article that is more excellent in the stiffness and strength against bending, and the impact resistance, and further excellent in design.

The step of the hot press molding may be a step of stamping molding. The stamping molding method is a method of heating the fiber aggregate in advance, thereby melting and softening polyolefin, in the state, placing the fiber aggregate in an inner part of a mold, closing the mold to perform mold clamping, and then pressure cooling the resultant. Heating devices such as a far-infrared heater, a heating plate, a high-temperature oven, and dielectric heating can be used for the heating. In the case where the molding temperature is relatively low, such as the case of obtainment of a molded article having a low density, the hot press method can also be adopted.

The step of the hot press molding may be a step of vacuum molding. In the vacuum molding, a space between the fiber aggregate and the die is made to be an evacuated state, which enhances the adhesion between the fiber aggregate and the die, and can enhance the moldability. It is preferable that the vacuum molding is performed in the mold clamping step of the above described stamping molding step. Specifically, the fiber aggregate is heated to melt and soften the polyolefin, and in the state, the resultant is placed in an inner part of a mold; and then in the step of closing the mold and performing mold clamping, the vacuum molding is performed. In the vacuum molding, vacuum suction is performed from a mold side. The vacuum molding is usually performed at a molding pressure of 1.0 kg/cm² or lower, for about 0.1 seconds or longer and 60 seconds or shorter. Due to adoption of the vacuum molding step in the molding step, it becomes easy, for example, to deeply draw a material or mold a material into a complicated shape.

The step of the hot press molding may be a step of the air-pressure molding. **In** the air-pressure molding, a compressed air is blown against the fiber aggregate, thereby brings the fiber aggregate into close contact with the mold, and can enhance the adhesion between the fiber aggregate and the die. It is preferable that the air-pressure molding is performed in the mold clamping step of the above described stamping molding step. Specifically, the fiber aggregate is heated to melt and soften the polyolefin, then, in the state, the resultant is placed in a mold, and is molded by a blow of the compressed air from a fiber aggregate side. The air-pressure molding is performed at a compressed air-pressure of 3 kg/cm² or higher and 8 kg/cm² or lower, in many cases, and is preferably performed for 0.1 seconds or longer and 60 seconds or shorter. Due to adoption of the air-pressure molding step in the molding step, it becomes easy, for example, to deeply draw a material or mold a material into a complicated shape.

### (2) Injection molded article

In the present embodiment, it is also preferable that the molded article is an injection molded article of the fiber aggregate.

In the injection molding step, the fiber aggregate is melted and kneaded, and the melted mixture is injected into a die, and is thereby molded, for example, with the use of a known injection molding machine. When the mixture is melted and kneaded, a known kneading machine may be used, and examples thereof include a single-screw kneader and a twin-screw kneader.

Examples of the known injection molding machine include a screw injection molding machine, a screw preplasticating injection molding machine, a plunger preplasticating injection molding machine, and a plunger injection molding machine.

Temperature conditions for the injection molding are appropriately determined according to a type of polyolefin, and it is preferable to set a cylinder temperature of the injection molding machine to a temperature of 10 to 80°C higher than a flow initiation temperature of the polyolefin to be used.

It is preferable to set a temperature of a die in a range of room temperature (for example, 23°C) to 180°C, from the viewpoint of a cooling rate of the polyolefin and the productivity.

Other injection conditions, such as a screw rotation speed, a back pressure, an injection speed, a holding pressure, and a pressure holding time can be appropriately adjusted.

In the case where the molded article is the injection molded article, it is preferable to crush the fiber aggregate by a shredder and supply the resultant, and it is preferable that the fiber aggregate is the dense sheet, from the viewpoint of easiness of supply to an injection molding machine such as suitability for crushing, and easiness of quantitative supply.

### (3) Compression molded article

In the present embodiment, it is also preferable that the molded article is a compression molded article of the fiber aggregate.

The compression molding step is preferably a step of continuously obtaining the molded article while continuously supplying the fiber aggregate, and examples thereof include supercalendering process.

In the above supercalendering process, the fiber aggregate is molded by being passed through between heated rollers to which a nip pressure is applied. A heating temperature of the roller to be used is preferably a temperature higher than the melting point of the polyolefin fiber by 10°C or more, is more preferably by 20°C or more, and is further preferably by 30°C or more, and is preferably a temperature equal to or lower than the melting point of the polyolefin fiber by 100°C or more, is more preferably by 90°C or more, and is further preferably by 80°C or more.

The nip pressure is preferably 100 kg/cm or higher, is more preferably 150 kg/cm or higher, and is further preferably 200 kg/cm or higher, and is preferably 450 kg/cm or lower, is more preferably 400 kg/cm or lower, and is further preferably 350 kg/cm or lower. The number of nip stages is preferably 1 stage or more, is more preferably 3 stages or more, and is further preferably 5 stages or more, and is preferably 20 stages or less, is more preferably 18 stages or less, and is further preferably 16 stages or less.

The step of the compression molding may be a step of discontinuously obtaining a molded article while discontinuously supplying the fiber aggregate, and examples thereof include compression molding and transfer molding.

In the above compression molding, the fiber aggregate is placed in a die cavity, the die is heated and pressurized, and the fiber aggregate is molded. In the above transfer molding, the fiber aggregate is placed in a transfer pot above a die, and the transfer pot and the die are heated and pressurized; and the fiber aggregate is flown into the die and is molded. In any of the methods, it is preferable to set the die temperature to a temperature higher than the flow initiation temperature of the polyolefin to be used, by 10 to 80°C.

### (4) Molded article obtained by injection molding of composition for molding

The molded article may be a molded article obtained by the injection molding of the composition for molding.

The molded article can be obtained by the same method as in the above (2), except that the composition for molding is supplied to the injection molding machine.

As described above, the composition for molding may contain an elastomer, but in the case where a composition for molding is used, which does not contain the elastomer, the elastomer may be supplied together with the composition for molding at the time of injection molding, and a mixture of the composition for molding and the elastomer may be injection molded.

The molded article obtained from the composition for molding can also be obtained by methods other than these methods, and the molded article can be obtained by the methods appropriately selected from the above described molding steps (hot press molding, injection molding, and compression molding). Two or more molding steps may be combined, or two or more steps may be simultaneously performed as one step. It is also acceptable, for example, to form the composition for molding into a sheet shape, subject the sheet to the hot press molding, and thereby obtain a molded article, or to form the composition for molding into a sheet shape, subject the sheet to the supercalendering process, and thereby obtain a molded article.

### (5) Hot-press molded article of pre-sheet

The hot-press molded article of the pre-sheet is read as the pre-sheet in place of the fiber aggregate in the above described (1) hot-press molded article, and the other description is the same as the description of the above described (1) hot-press molded article.

In the molding step, it is acceptable to replace a part or all of the fiber aggregate for molding and the composition for molding with the crushed product of the molded article of the present embodiment, and recycle the resultant. For example, it is possible to mix a crushed product of the hot-press molded article of (1) and/or a crushed product of the molded article obtained by injection molding of the composition for molding of (4) with a fiber aggregate for molding, and obtain a recycle fiber aggregate for molding; and to obtain a recycle molded article by applying the molding method of the present embodiment to the recycle fiber aggregate for molding. For example, it is possible to replace a crushed product of (4) a molded article obtained by injection molding of the composition for molding, with a part or all of the composition for molding, subject the resultant to injection molding, and obtain a recycle molded article. For example, it is possible to use a crushed product of the hot-press molded article for (1), as a composition for molding for (4) the molded article obtained by injection molding the composition for molding, and obtain a recycle molded article. For example, it is possible to replace a crushed product of (4) the molded article obtained by injection molding the composition for molding, with a part or all of the fiber aggregate, melt and knead the resultant, use the resultant as a composition for molding for (4) the molded article obtained by injection molding the composition for molding, and obtain a recycle molded article. For example, it is possible to replace a crushed product of (1) the hot-press molded article, with a part or all of the fiber aggregate, melt and knead the resultant, use the resultant as a composition for molding for (4) the molded article obtained by injection molding the composition for molding, and obtain a recycle molded article.

### [Properties of molded article]

A density of a molded article of the present embodiment is preferably 0.5 g/cm³ or higher, is more preferably 0.8 g/cm³ or higher, and is further preferably 1.0 g/cm³ or higher. The density of the molded article is preferably 3.0 g/cm³ or lower, is more preferably 1.5 g/cm³ or lower, is further preferably 1.2 g/cm³ or lower.

A thickness of the molded article is not particularly limited, but is 0.5 mm or larger, is more preferably 1 mm or larger, and is further preferably 2 mm or larger, and is preferably 200 mm or smaller, is more preferably 100 mm or smaller, further preferably 50 mm or smaller, is still further preferably 20 mm or smaller, and is particularly preferably 10 mm or smaller.

Due to the thickness of the molded article being controlled to 2 mm or larger, the molded article can be suitably used for applications in which the impact resistance is required, and accordingly, the thickness of the molded article is particularly preferably 2 mm or larger.

The molded article of the present embodiment preferably has a high flexural modulus, and when the molded article has a high flexural modulus, the molded article becomes excellent in the stiffness against bending, which is preferable. The flexural modulus of the molded article is preferably 2.0 GPa or larger, is more preferably 2.5 GPa or larger, is further preferably 2.8 GPa or larger, and is even more preferably 3.0 GPa or larger. The upper limit is not particularly limited, but is preferably 10 GPa or smaller, from the viewpoint of ease of production.

The flexural modulus of the molded article is measured in accordance with JIS K7171: 2016.

The molded article of the present embodiment preferably has a high bending strength, and when the molded article has a high bending strength, the molded article becomes excellent in the stiffness, which is preferable. The bending strength of the molded article is preferably 20 MPa or higher, is more preferably 30 MPa or higher, and is further preferably 35 MPa or higher. The upper limit is not particularly limited, but is preferably 100 MPa or lower, from the viewpoint of the ease of production.

The bending strength of the molded article is measured in accordance with JIS K7171: 2016.

The molded article of the present embodiment preferably has a high Charpy impact strength; and the Charpy impact strength of the molded article is preferably 2.0 kJ/m² or higher, is more preferably 4.0 kJ/m² or higher, is further preferably 8.0 kJ/m² or higher, even more preferably 10.0 kJ/m² or higher, and is further more preferably 12 kJ/m² or higher. The upper limit is not particularly limited, but is preferably 100 kJ/m² or lower, from the viewpoint of the ease of production.

The Charpy impact strength means that the larger the value is, the more excellent the impact resistance is.

The Charpy impact strength is measured in accordance with JIS K7111-1: 2012, and specifically, is measured by a method described in Examples.

When a tensile strength of the molded article in a first direction is represented by t, and a tensile strength of the molded article in a second direction perpendicular to the first direction is represented by y, t/y is preferably 0.3 or larger, is more preferably 0.4 or larger, and is further preferably 0.5 or larger, and is preferably 2.0 or smaller, is more preferably 1.7 or smaller, and is further preferably 1.5 or smaller. In other words, the pulp fibers are randomly oriented also in the molded article, and the molded article is excellent in the isotropy.

The tensile strength in each direction of the molded article can be measured by the same method as in the measurement method in the fiber aggregate.

### (Applications)

The molded article which is molded from the fiber aggregate or the composition for molding of the present embodiment is preferably used for electric and electronic devices, OA devices, household electrical appliances, civil engineering and construction, automobile parts, aircraft parts, structural parts and housings, containers (for example, food containers, drug packaging containers, cosmetic packaging containers, and medical equipment packaging containers), furniture, daily sundries, medical devices, and the like.

Among these applications, the molded article is suitable for applications to which the impact resistance is required, and for example, is suitable as parts of civil engineering and construction, automobiles, or aircraft, structural parts, and housings.

### Examples

The features of the present invention will be described more specifically below with reference to Examples and Comparative Examples. The materials, amounts to be used, ratios, contents of treatment, procedures of processes and the like shown in the following Examples can be appropriately changed as long as the above factors do not deviate from the spirit of the present invention. Accordingly, the scope of the present invention should not be interpreted as being limited by the specific examples shown below.

### (Example 1)

### <Preparation of fiber aggregate>

NBKP was subjected to defibration treatment using a swirling type jet stream defibration apparatus, and defibrated dry pulp was obtained. The wind velocity of the treatment in the defibration machine was 45 m/min, and turbulence was generated by baffles provided in the device. An average fiber length of the obtained defibrated dry pulp was 2.38 mm, the average fiber width was 34.3 µm, and a ratio of fine fiber was 11.4%.

Next, the obtained defibrated dry pulp was uniformly mixed with polypropylene fiber (melting point of 160°C, fineness of 6.6 dtex, fiber length of 5 mm, fiber diameter of 30 µm, and also referred to as PP fiber) and polyethylene/polypropylene composite core-sheath fiber (melting point of core portion of 160°C, melting point of sheath portion of 110°C, fineness of 1.7 dtex, fiber length of 5 mm, fiber diameter of 15 µm, diameter of core portion of 10.6 µm, mass of core portion / mass of sheath portion = 1/1, and also referred to as "PE/PP composite fiber") by an air stream at a ratio (mass ratio) of 60/25/15; and a fiber mixture was obtained.

Next, an air-laid web was formed from the fiber mixture, with the use of the web forming apparatus 1 shown in Fig. 1. Specifically, the first carrier sheet 41 was fed out by the first carrier sheet supply means 40, onto the air-permeable endless belt 20 which is mounted on the conveyor 10 and travels. In Example 1, tissue paper (basis weight 14 g/m²) was used as the first carrier sheet 41. The "basis weight" was measured according to "Method for measuring paper and paperboard-basis weight" described in JIS P 8124: 2011.

While the air-permeable endless belt 20 was sucked by the suction box 60, the fiber mixture was dropped and deposited on the first carrier sheet 41, from the fiber mixture supply means 30 together with the air flow, and a cotton-like fiber aggregate was obtained. At this time, the fiber mixture was supplied so that the basis weight of the air-laid web portion was set to 600 g/m².

Next, a second carrier sheet 51 was laminated on the cotton-like fiber aggregate on the first carrier sheet 41, by a second carrier sheet supply means 50, and an air-laid web-containing laminated sheet was obtained. In Example 1, tissue paper (basis weight 14 g/m²) was used as the second carrier sheet 51. In other words, in Example 1, the same sheet was used as the first carrier sheet 41 and the second carrier sheet 51.

### <Preparation of fiber aggregate bulky sheet>

The obtained air-laid web-containing laminated sheet was passed through a hot air circulating conveyor oven type of a box type dryer, and was subjected to hot air treatment at a temperature of 140°C. After that, a density was adjusted so that the bulk specific gravity became 0.06 g/mL by a roll press process, the first carrier sheet and the second carrier sheet were peeled off, and a fiber aggregate bulky sheet was obtained which had a basis weight of 551.8 g/m². The fiber aggregate bulky sheet had a T/Y of 1.18, a bulk specific gravity of 0.062 g/mL, and a thickness of 8.9 mm.

### <Preparation of molded article of the present embodiment>

The fiber aggregate bulky sheet was cut into 20 cm × 20 cm, and thereby, five cut pieces were obtained. The obtained cut pieces were stacked, and a laminated structure of five layers was prepared. Next, the laminated structure was placed in a die made from stainless steel having an opening of 20 cm × 20 cm and a depth of 2 mm. Then, the die was set in a hot press machine, was pre-pressed at a temperature of 180°C and a pressure of 1.5 MPa for 5 minutes, and was further subjected to a pressing process of being pressurized to 10 MPa for 15 minutes. After that, the resultant was cooled while the 10 MPa was maintained, and a pulp fiber-containing molded article was obtained. A density of the pulp fiber-containing molded article was 1.12 g/cm³.

### (Example 2)

A fiber aggregate bulky sheet was prepared in the same way as in Example 1, except that in the <preparation of fiber aggregate> of Example 1, the polyethylene/polypropylene composite core-sheath fiber was replaced with maleic anhydride-modified polyethylene / polypropylene composite core-sheath fiber (melting point of core portion of 160°C, melting point of sheath portion of 100°C, fineness of 1.7 dtex, fiber length of 3 mm, fiber diameter of 15 µm, and also referred to as MAPE/PP composite fiber), and a pulp fiber-containing molded article was obtained. The fiber aggregate bulky sheet had a T/Y of 1.34, a basis weight of 587.1 g/m², a bulk specific gravity of 0.057 g/mL, and a thickness of 10.3 mm. A density of the pulp fiber-containing molded article was 1.11 g/cm³.

### (Example 3)

A fiber aggregate bulky sheet was prepared in the same way as in Example 1, except that the ratio (mass ratio) of the fiber mixture was changed to 70/15/15, in the <preparation of fiber aggregate> of Example 1, and a pulp fiber-containing molded article was obtained. The fiber aggregate bulky sheet had a T/Y of 1.07, a basis weight of 575.7 g/m², a bulk specific gravity of 0.057 g/mL, and a thickness of 10.1 mm. A density of the pulp fiber-containing molded article was 1.17 g/cm³.

### (Example 4)

A fiber aggregate bulky sheet was prepared in the same way as in Example 3, except that in the <preparation of fiber aggregate> of Example 3, the polyethylene/polypropylene composite core-sheath fiber was replaced with maleic anhydride-modified polyethylene / polypropylene composite core-sheath fiber (melting point of core portion of 160°C, melting point of sheath portion of 100°C, fineness of 1.7 dtex, fiber length of 3 mm, and fiber diameter of 15 µm), and a pulp fiber-containing molded article was obtained. The fiber aggregate bulky sheet had a T/Y of 1.21, a basis weight of 555.1 g/m², a bulk specific gravity of 0.061 g/mL, and a thickness of 9.1 mm. A density of the pulp fiber-containing molded article was 1.18 g/cm³.

### (Example 5)

A fiber aggregate bulky sheet was prepared in the same way as in Example 1, except that the ratio (mass ratio) of the fiber mixture was changed to 50/35/15, in the <preparation of fiber aggregate> of Example 1, and a pulp fiber-containing molded article was obtained. The fiber aggregate bulky sheet had a T/Y of 1.12, a basis weight of 555.1 g/m², a bulk specific gravity of 0.061 g/mL, and a thickness of 9.1 mm. A density of the pulp fiber-containing molded article was 1.17 g/cm³.

### (Example 6)

A fiber aggregate bulky sheet was prepared in the same way as in Example 1, except that the ratio (mass ratio) of the fiber mixture was changed to 30/55/15, in the <preparation of fiber aggregate> of Example 1, and a pulp fiber-containing molded article was obtained. The fiber aggregate bulky sheet had a T/Y of 1.06, a basis weight of 567.3 g/m², a bulk specific gravity of 0.061 g/mL, and a thickness of 9.3 mm. A density of the pulp fiber-containing molded article was 1.15 g/cm³.

### (Example 7)

A fiber aggregate bulky sheet was prepared in the same way as in Example 1, except that the ratio (mass ratio) of the fiber mixture was changed to 20/65/15, in the <preparation of fiber aggregate> of Example 1, and a pulp fiber-containing molded article was obtained. The fiber aggregate bulky sheet had a T/Y of 1.06, a basis weight of 564.0 g/m², a bulk specific gravity of 0.060 g/mL, and a thickness of 9.4 mm. A density of the pulp fiber-containing molded article was 1.12 g/cm³.

### (Example 8)

A pulp fiber-containing molded article was obtained in the same way as in Example 3, except that in the <preparation of molded article of the present embodiment> of Example 3, polyethylene powder (PE powder) was arranged at each of four locations of lamination interfaces that exist in the laminated structure of the five layers which are each formed of the fiber aggregate bulky sheet, in such a way that the respective basis weights in the lamination interfaces became 125 g/m². The fiber aggregate bulky sheet had a T/Y of 1.07, a basis weight of 575.7 g/m², a bulk specific gravity of 0.057 g/mL, and a thickness of 10.1 mm. A density of the pulp fiber-containing molded article was 1.18 g/cm³.

### (Example 9)

A pulp fiber-containing molded article was obtained in the same way as in Example 3, except that in the <preparation of molded article of the present embodiment> of Example 3, polyethylene powder was arranged at each of four locations of lamination interfaces that exist in the laminated structure of the five layers which are each formed of the fiber aggregate bulky sheet, in such a way that the respective basis weights in the lamination interfaces became 62.5 g/m² (two locations on the outside) and 187.5 g/m² (two locations on the inside). The fiber aggregate bulky sheet had a T/Y of 1.07, a basis weight of 575.7 g/m², a bulk specific gravity of 0.057 g/mL, and a thickness of 10.1 mm. In addition, a density of the pulp fiber-containing molded article was 1.18 g/cm³.

### (Example 10)

A pulp fiber-containing molded article was obtained in the same way as in Example 3, except that in the <preparation of molded article of the present embodiment> of Example 3, polyethylene powder was arranged at each of two inside locations of the lamination interfaces that exist in the laminated structure of the five layers which are each formed of the fiber aggregate bulky sheet, in such a way that the respective basis weights in the lamination interfaces became 250 g/m². The fiber aggregate bulky sheet had a T/Y of 1.07, a basis weight of 575.7 g/m², a bulk specific gravity of 0.057 g/mL, and a thickness of 10.1 mm. A density of the pulp fiber-containing molded article was 1.21 g/cm³.

### (Example 11)

In the <preparation of fiber aggregate> of Example 1, the polypropylene fiber was not mixed, and the defibrated dry pulp and the polyethylene/polypropylene composite core-sheath fiber were uniformly mixed at a ratio (mass ratio) of 70/30, by an air stream, and a fiber mixture was obtained. The other procedures were the same as in Example 1 to prepare a fiber aggregate bulky sheet, and a pulp fiber-containing molded article was obtained. The fiber aggregate bulky sheet had a T/Y of 1.08, a basis weight of 603.9 g/m², a bulk specific gravity of 0.061 g/mL, and a thickness of 9.9 mm. A density of the pulp fiber-containing molded article was 1.08 g/cm³.

### (Example 12)

In the <preparation of fiber aggregate> of Example 1, the polypropylene fiber was not mixed, and the defibrated dry pulp and the polyethylene/polypropylene composite core-sheath fiber were uniformly mixed at a ratio (mass ratio) of 80/20, by an air stream, and a fiber mixture was obtained. The other procedures were the same as in Example 1 to prepare a fiber aggregate bulky sheet, and a pulp fiber-containing molded article was obtained. The fiber aggregate bulky sheet had a T/Y of 1.05, a basis weight of 598.5 g/m², a bulk specific gravity of 0.063 g/mL, and a thickness of 9.5 mm. A density of the pulp fiber-containing molded article was 1.00 g/cm³.

### (Comparative Example 1)

In the <preparation of fiber aggregate> of Example 1, the defibrated dry pulp, the polypropylene fiber, and the polyethylene/polypropylene composite core-sheath fiber were uniformly mixed at a ratio (mass ratio) of 73/23/4 by an air stream, and a fiber mixture was obtained. The other procedures were the same as in Example 1, and a fiber aggregate bulky sheet was prepared. The aggregate bulky sheet had a basis weight of 600.6 g/m², a bulk specific gravity of 0.042 g/mL, and a thickness of 14.3 mm; but the T/Y could not be measured, because the amount of the thermal fusion bonding resin component was small, accordingly, the sheet could not maintain its shape, and had a poor appearance. The pulp fiber-containing molded article could not be obtained.

### (Comparative Example 2)

In the <preparation of fiber aggregate> of Example 1, the defibrated dry pulp, the polypropylene fiber, and the polyethylene/polypropylene composite core-sheath fiber were uniformly mixed at a ratio (mass ratio) of 63/33/4 by an air stream, and a fiber mixture was obtained. The other procedures were the same as in Example 1, and a fiber aggregate bulky sheet was prepared. The aggregate bulky sheet had a basis weight of 598.6 g/m², a bulk specific gravity of 0.041 g/mL, and a thickness of 14.6 mm; but the T/Y could not be measured, because the amount of the thermal fusion bonding resin component was small, accordingly, the sheet could not maintain its shape, and had a poor appearance. The pulp fiber-containing molded article could not be obtained.

### (Comparative Example 3)

A pulp fiber-containing molded article was obtained in the same way as in Example 1, except that in the <preparation of fiber aggregate> of Example 1, the polypropylene fiber was not blended, and the defibrated dry pulp and the polyethylene/polypropylene composite core-sheath fiber were uniformly mixed at a ratio (mass ratio) of 60/40 by an air stream, and a fiber mixture was obtained, and that in the <preparation of molded article of the present embodiment>, the pressing pressure was changed to 40 MPa. The fiber aggregate bulky sheet had a T/Y of 1.04, a basis weight of 598.5 g/m², a bulk specific gravity of 0.063 g/mL, and a thickness of 9.5 mm. A density of the pulp fiber-containing molded article was 1.20 g/cm³.

### (Comparative Example 4)

In the <preparation of fiber aggregate> of Example 1, the polypropylene fiber was not mixed, and the defibrated dry pulp and the polyethylene/polypropylene composite core-sheath fiber were uniformly mixed at a ratio (mass ratio) of 50/50, by an air stream, and a fiber mixture was obtained. The other procedures were the same as in Example 1 to prepare a fiber aggregate bulky sheet, and a pulp fiber-containing molded article was obtained. The fiber aggregate bulky sheet had a T/Y of 1.13, a basis weight of 603.9 g/m², a bulk specific gravity of 0.061 g/mL, and a thickness of 9.9 mm; but wrinkles were remarkably formed due to shrinkage, and the appearance was poor. A density of the pulp fiber-containing molded article was 1.18 g/cm³; but the wrinkles formed in the fiber aggregate bulky sheet remained also in the molded article.

### (Comparative Example 5)

In the <preparation of fiber aggregate> of Example 1, the polypropylene fiber was not mixed, and the defibrated dry pulp and the polyethylene/polypropylene composite core-sheath fiber were uniformly mixed at a ratio (mass ratio) of 30/70, by an air stream, and a fiber mixture was obtained. The other procedures were the same as in Example 1 to prepare a fiber aggregate bulky sheet, and a pulp fiber-containing molded article was obtained. The fiber aggregate bulky sheet had a T/Y of 1.07, a basis weight of 603.9 g/m², a bulk specific gravity of 0.061 g/mL, and a thickness of 9.9 mm; but the wrinkles were remarkably formed due to the shrinkage, and the appearance was poor. A density of the pulp fiber-containing molded article was 1.15 g/cm³; but the wrinkles formed in the fiber aggregate bulky sheet remained also in the molded article.

### (Comparative Example 6)

A twin screw kneader was charged with 30 parts by mass of bleached softwood pulp and 70 parts by mass of polypropylene resins (produced by Japan Polypropylene Corporation, Novatec PP MA3), and the mixture was melted and kneaded at a temperature of 200°C and a rotation speed of 30 rpm. The composition for molding (resin composition) which was obtained by melting and kneading was extruded into a strand shape, and then was cut into pellets. Next, the pellet was placed in a die made from stainless steel having an opening of 20 cm × 20 cm and a depth of 2 mm, in such a way that the basis weight was 3000 g/m². Then, the die was set in a hot press machine, was pre-pressed at a temperature of 180°C and a pressure of 1.5 MPa for 5 minutes, and was further subjected to a pressing process of being pressurized to 10 MPa for 15 minutes. After that, the resultant was cooled while the 10 MPa was maintained, and a pulp fiber-containing molded article was obtained. A density of the pulp fiber-containing molded article was 0.98 g/cm³.

### (Example 13)

In the <preparation of molded article of the present embodiment> of Example 1, the fine fibrous cellulose-containing sheet containing the resin layer was arranged on both surfaces of the outermost layer of the laminated structure, and a pre-sheet was obtained. The same procedures as in Example 1 were carried out except that the pre-sheet was press-molded and a pulp fiber-containing molded article was obtained. The fine fibrous cellulose-containing sheet was prepared in the following way.

### <Preparation of fine fibrous cellulose-containing sheet containing resin layer>

### [Preparation of phosphorylated pulp]

As raw material pulp, a softwood kraft pulp was used which was produced by Oji Paper Co., Ltd. (solid content 93% by mass, basis weight 208 g/m², sheet form, and in which Canadian standard freeness (CSF) measured in accordance with JIS P 8121-2: 2012 after disintegration was 700 mL). The raw material pulp was subjected to phosphorylation treatment in the following way. Firstly, a mixed aqueous solution of ammonium dihydrogen phosphate and urea was added to 100 parts by mass (absolute dry mass) of the above raw material pulp, the resultant mixture was adjusted so that the ammonium dihydrogen phosphate was 45 parts by mass, urea was 120 parts by mass, and water was 150 parts by mass, and chemical solution-impregnated pulp was obtained. Next, the obtained chemical solution-impregnated pulp was heated in a hot air dryer at 165°C for 200 seconds, thereby a phosphate group was introduced into cellulose in the pulp, and phosphorylated pulp was obtained.

### [Cleaning treatment]

Next, the obtained phosphorylated pulp was subjected to cleaning treatment. The cleaning treatment was performed by repetition of operations of stirring a pulp dispersion obtained by pouring 10 L of ion-exchanged water to 100 g (absolute dry mass) of the phosphorylated pulp so that the pulp was uniformly dispersed, and then filtering and dehydrating the pulp dispersion. The cleaning was terminated when the electric conductivity of the filtrate reached 100 µS/cm or lower.

### [Neutralization treatment]

Next, the phosphorylated pulp after cleaning was subjected to neutralization treatment in the following way. Firstly, the phosphorylated pulp after cleaning was diluted with 10 L of ion exchanged water, and then 1 N of an aqueous sodium hydroxide solution was added little by little while the mixture was stirred, and thereby, a phosphorylated pulp slurry with a pH of 12 or higher and 13 or lower was obtained. Next, the phosphorylated pulp slurry was dehydrated, and a neutralized phosphorylated pulp was obtained.

### [Cleaning treatment]

Next, the phosphorylated pulp after the neutralization treatment was subjected to the above cleaning treatment. Thereby-obtained phosphorylated pulp was subjected to measurement of infrared absorption spectrum by FT-IR. As a result, absorption based on a phosphoric acid group was observed in the vicinity of 1230 cm⁻¹, which confirmed that the phosphoric acid group was added to the pulp. The obtained phosphorylated pulp was supplied to a test and was analyzed with an X-ray diffraction apparatus. As a result, typical peaks were confirmed at two positions in the vicinity of 2θ=14° or larger and 17° or smaller, and in the vicinity of 2θ=22° or larger and 23° or smaller, and it was confirmed that the phosphorylated pulp had a type I crystal of cellulose. The amount of phosphoric acid groups (amount of first dissociated acid) was 1.45 mmol/g, which was measured by a measurement method that would be described later. A fiber width was 30 µm, which was measured by a measurement method that would be described later. Ion-exchanged water was added to the obtained phosphorylated pulp, and a first cellulose fiber dispersion containing first cellulose fibers of which the solid content concentration was 2% by mass was obtained.

### [Refining]

The first cellulose fiber dispersion obtained by the above method was treated twice with a wet atomizing apparatus (Star Burst, manufactured by Sugino Machine Limited) at a pressure of 200 MPa, and a second cellulose fiber dispersion was obtained which contained second cellulose fiber. It was confirmed by X-ray diffraction that the second cellulose fiber maintained the type I crystal of cellulose. The amount of phosphoric acid groups (amount of first dissociated acid) was 1.45 mmol/g, which was measured by a measurement method that would be described later. The fiber width was 3 to 5 nm, which was measured by a measurement method that would be described later.

### [Formation into sheet]

The first cellulose fiber dispersion, the second cellulose fiber dispersion, a polyvinyl alcohol solution (Gohsenex^{™} Z-200, produced by Nippon synthetic chemical industry Co., Ltd.), and a polyamine polyamide/epichlorohydrin solution (Arafix 255, produced by Arakawa chemical industries Ltd.) were mixed so that the first cellulose fiber became 75 parts by mass, the second cellulose fiber became 25 parts by mass, the polyvinyl alcohol (PVA) became 10 parts by mass, and the polyamine polyamide/epichlorohydrin (PAE) became 5 parts by mass; and a coating liquid 1 was obtained. The solid content concentration of the coating liquid 1 was adjusted to 0.5% by mass. Next, the coating liquid 1 was weighed so that the basis weight of a sheet to be obtained (layer formed of the solid content of the above coating liquid) became 180 g/m²; and the resultant was applied to a commercially available acrylic plate, and was then dried by a thermostatic dryer at 50°C. A metal frame (metal frame having an inner dimension of 180 mm × 180 mm and a height of 5 cm) for blocking was arranged on the acrylic plate so that a predetermined basis weight was obtained. Next, the sheet after drying was peeled off from the above acrylic plate, and a sheet was obtained which contained the first cellulose fiber and the second cellulose fiber. The first cellulose fiber had a fiber width of 29 µm and a water retention degree of 371%, and the second cellulose fiber had a fiber width of 3 to 5 nm.

A solution of a maleic anhydride-modified polypropylene resin (Hardlen^{®} NS-2000, produced by Toyobo Co., Ltd.: 15% by mass of polypropylene resin component, 75% by mass of methylcyclohexane, and 10% by mass of butyl acetate) was applied to the surface of the fine fibrous cellulose-containing sheet opposite to the side which was peeled from the acrylic plate, with a bar coater, and a coating layer was obtained. After that, the fine fibrous cellulose-containing sheet on which the coating layer was formed was heated at 100°C for 1 hour, and thereby the coating layer was cured, and was converted into a resin layer. Thereby, a fine fibrous cellulose-containing sheet containing the resin layer was obtained. A thickness of the resin layer was 5 µm.

### (Reference Example 1)

A fiber aggregate bulky sheet was prepared in the same way as in Example 1, except that in the <preparation of fiber aggregate> of Example 1, the polypropylene fiber was replaced with polyvinyl chloride fiber (melting point of 170°C, fineness of 3 dtex, fiber length of 5 mm, and fiber diameter of 17 µm), and a pulp fiber-containing molded article was obtained. The polyvinyl chloride fiber which was used was obtained by melt-spinning a vinyl chloride resin (Kanevinyl^{™} S-400, produced by Kaneka Corporation), and cutting the obtained fiber into a fiber length of 5 mm.

### (Reference Example 2)

In the <preparation of fiber aggregate> of Example 1, the polypropylene fiber was replaced with a polystyrene powder. In the <preparation of molded article of the present embodiment>, the temperature was set to 270°C, and the laminated structure was molded. The other procedures were the same as in Example 1 to prepare a fiber aggregate bulky sheet, and a pulp fiber-containing molded article was obtained. The polystyrene powder was produced in the following way.

### <Preparation of resin powder>

A polystyrene resin (PSJ-polystyrene GPPS, HF77, produced by PS Japan Corporation) was crushed with a super-rotary cutter (Yoshikoh Limited Company, blower: 50 Hz, and damper opening degree: 40 mm), and was pulverized. The particle diameter of the finished powder was 100 to 500 µm.

### (Reference Example 3)

In the <preparation of fiber aggregate> of Example 1, the polypropylene fiber was replaced with an ABS powder. At this time, the ABS powder was obtained by changing the polystyrene resin to the ABS resin (Denka ABS, GR-0500, produced by Denka Company Limited), in the <preparation of resin powder> of Example 13. In the <preparation of molded article of the present embodiment>, the temperature was set to 270°C, and the laminated structure was molded. The other procedures were the same as in Example 1 to prepare a fiber aggregate bulky sheet, and a pulp fiber-containing molded article was obtained.

### (Reference Example 4)

In the <preparation of fiber aggregate> of Example 1, the polypropylene fiber was replaced with an acrylonitrile-styrene powder. At this time, the acrylonitrile-styrene powder was obtained by changing the polystyrene resin to an acrylonitrile-styrene resin (Denka AS, AS-EXS, produced by Denka Company Limited), in the <preparation of resin powder> of Reference Example 3. The other procedures were the same as in Example 1 to prepare a fiber aggregate bulky sheet, and a pulp fiber-containing molded article was obtained.

### (Reference Example 5)

In the <preparation of fiber aggregate> of Example 1, the polypropylene fiber was replaced with polyethylene terephthalate fiber (produced by Teijin Limited, TT04; melting point of 250°C, fineness of 3.3 dtex, fiber length of 5 mm, and fiber diameter of 18 µm). In the <preparation of molded article of the present embodiment>, the temperature was set to 270°C, and the laminated structure was molded. The other procedures were the same as in Example 1 to prepare a fiber aggregate bulky sheet, and a pulp fiber-containing molded article was obtained.

### (Reference Example 6)

A fiber aggregate bulky sheet was prepared in the same way as in Example 1, except that in the <preparation of fiber aggregate> of Example 1, the polypropylene fiber was replaced with acrylic fiber (Vonnel M.V.P-C300, produced by Mitsubishi Chemical Corporation; melting point of 160°C, fineness of 3 dtex, fiber length of 5 mm, and fiber diameter of 17 µm), and a pulp fiber-containing molded article was obtained.

### (Reference Example 7)

A fiber aggregate bulky sheet was prepared in the same way as in Example 1, except that in the <preparation of fiber aggregate> of Example 1, the polypropylene fiber was replaced with polyamide fiber (melting point of 180 to 190°C, fineness of 3 dtex, fiber length of 5 mm, and fiber diameter of 17 µm), and a pulp fiber-containing molded article was obtained. The polyamide fiber which was used was obtained by melt-spinning a polyamide resin (Rilsan^{®} PA11, produced by Arkema Company), and cutting the obtained fiber into a fiber length of 5 mm.

### (Reference Example 8)

In the <preparation of fiber aggregate> of Example 1, the polypropylene fiber was replaced with a polyacetal powder. At this time, the polyacetal powder was obtained by changing the polystyrene resin to a polyacetal resin (Duracon^{®} POM, M90-44, produced by Polyplastics Co., Ltd.), in the <preparation of resin powder> of Reference Example 2. The other procedures were the same as in Example 1 to prepare a fiber aggregate bulky sheet, and a pulp fiber-containing molded article was obtained.

### (Reference Example 9)

In the <preparation of fiber aggregate> of Example 1, the polypropylene fiber was replaced with polycarbonate fiber (melting point of 250°C, fineness of 3 dtex, fiber length of 5 mm, and fiber diameter of 17 µm). In the <preparation of molded article of the present embodiment>, the temperature was set to 270°C, and the laminated structure was molded. The other procedures were the same as in Example 1 to prepare a fiber aggregate bulky sheet, and a pulp fiber-containing molded article was obtained. The polycarbonate fiber which was used was obtained by melt-spinning a polycarbonate resin (Iupilon^{™} S3000, produced by Mitsubishi Engineering-Plastics Corporation), and cutting the obtained fiber into a fiber length of 5 mm.

### (Reference Example 10)

In the <preparation of fiber aggregate> of Example 1, the polypropylene fiber was replaced with a polybutylene succinate powder. At this time, the polybutylene succinate powder was obtained by changing the polystyrene resin to a polybutylene succinate resin (BioPBS^{™}, FZ71PM, produced by Mitsubishi Chemical Corporation), in the <preparation of resin powder> of Reference Example 2. The other procedures were the same as in Example 1 to prepare a fiber aggregate bulky sheet, and a pulp fiber-containing molded article was obtained.

### (Reference Example 11)

A fiber aggregate bulky sheet was prepared in the same way as in Example 1, except that in the <preparation of fiber aggregate> of Example 1, the polypropylene fiber was replaced with polylactic acid fiber (melting point of 130 to 170°C, fineness of 2 dtex, fiber length of 5 mm, and fiber diameter of 14 µm), and a pulp fiber-containing molded article was obtained. The polylactic acid fiber which was used was obtained by melt-spinning a polylactic acid resin (Ingeo 6100D, produced by NatureWorks, Inc.), and cutting the obtained fiber into a fiber length of 5 mm.

### [Measurement and evaluation method]

### (Method for measuring fiber length and fiber diameter of polyolefin fiber)

Twenty polyolefin fibers selected at random were observed with an optical microscope, and the fiber length and the fiber diameter were measured.

### (Method for measuring average fiber length, average fiber diameter, and ratio of fine fiber, of pulp fiber)

The average fiber length and average fiber diameter of the pulp fibers were measured with a fiber image analysis apparatus (Valmet FS5, manufactured by Valmet K.K.) in accordance with ISO 16065-2. A proportion of fine fibers having a length of 0.1 mm or shorter in a measured length-weighted average fiber length distribution was defined as a ratio of fine fiber.

### (Method for measuring melting point of polyolefin fiber)

The polyolefin fiber in the amount of 5 mg is cut out, and a melting point of the polyolefin fiber is measured with a differential scanning calorimeter (DSC). The melting point is measured with the use of Diamond DSC manufactured by PerkinElmer Japan G. K., under a nitrogen atmosphere while a temperature is raised from 30°C to 280°C at a rate of 20°C/min.

When there is a catalog value of the polyolefin fiber, or the like, the catalog value may be adopted.

### (Method for measuring bulk specific gravity of fiber aggregate)

The bulk specific gravities of the fiber aggregate bulky sheet and the fiber aggregate dense sheet were calculated by measurement of the thicknesses and masses of the sheets after the sheets of 50 mm square were humidified for 24 hours under conditions of 23°C and 50% RH. The thickness of the sheet was measured with a digital thickness gauge (DG-127, manufactured by Ozaki Mfg. Co., Ltd.).

### (Method for measuring T/Y)

A flow direction (a running direction of the conveyor 10) in the production process of the obtained fiber aggregate was defined as a first direction, and a direction perpendicular to the first direction was defined as a second direction; and the tensile strength (of which the unit was N/m) was measured in accordance with JIS P8113: 2006. The tensile strength (of which the unit was MPa) in each direction was calculated by dividing the tensile strength by a thickness of a test piece. A strip of 15 mm × 180 mm was subjected to the measurement at a rate of 20 mm/min with the use of a tensile tester which is Tensilon manufactured by A & D Company.

### (Method for evaluating appearance of fiber aggregate)

The obtained fiber aggregate bulky sheet was cut into 10 cm × 10 cm, and the appearance was observed and evaluated according to the following criteria.
A: The sheet after cutting maintains the shape and the dimensions, and defects such as the wrinkles and cracks are not generated in the sheet.
B: The sheet after cutting maintains the shape and the dimensions, but the defects such as the wrinkles and the cracks are generated in the sheet, and a degree thereof is slight.
C: The sheet after cutting maintains the shape and the dimensions, but the defects such as the wrinkles and the cracks are generated in the sheet, and the degree thereof is significant.
D: The sheet after cutting does not maintain the shape and the dimensions due to the defects.

### <Evaluation>

A density, a flexural modulus, a bending strength and an impact resistance of the obtained molded article (molded product) were measured according to the following methods. The appearance of the molded article was visually evaluated. The results are shown in Table 1.

### (Method for measuring density of molded article)

The obtained molded article (molded product) was cut into a strip-shaped test piece having a length of 80 mm and a width of 10 mm. The thickness of the strip-shaped test piece was measured with a constant-pressure thickness gauge (model number PG-02J, manufactured by Teclock Co., Ltd.), and a volume of the strip-shaped test piece was calculated. Furthermore, the mass of the strip-shaped test piece was measured, and thereby, the density was calculated.

### (Method for measuring flexural modulus and bending strength of molded article)

The obtained molded article was cut into a strip-shaped test piece having a length of 80 mm and a width of 10 mm, and a three point bending test was performed in accordance with JIS K7171: 2016. The flexural modulus and the bending strength were evaluated in such a way that the larger the obtained values are, the more excellent the stiffness and the strength against bending are, respectively.

### (Method for measuring impact resistance of molded article)

The obtained molded article was cut into a strip-shaped test piece having a length of 80 mm and a width of 10 mm, and a notch Charpy impact test (striking direction: edgewise) was performed in accordance with JIS K7111-1: 2012. The obtained Charpy impact strength was evaluated in such a way that the larger the numerical value is, the better the impact resistance is, and the stronger for the impact the molded article is.

### (Method for evaluating appearance of molded article)

The obtained molded article was observed, and was evaluated according to the following criteria.
A: Defects such as wrinkles and cracks are not generated in the molded article.
B: The defects such as the wrinkles and the cracks are generated in the molded article, but a degree thereof is slight.
C: The defects such as the wrinkles and the cracks are generated in the molded article, and the degree thereof is significant. The molded article shows a uniform plate form.
D: The defects such as the wrinkles and the cracks are generated in the molded article, and the degree thereof is significant. The molded article does not show a uniform plate shape, and partial rupture or defect is observed.

**Table 1-1**

| | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Molding method | | Press | Press | Press | Press | Press | Press | Press | Press | Press | Press | Press | Press |
| Composition [mass%] | Pulp fiber | 60 | 60 | 70 | 70 | 50 | 30 | 20 | 60 | 60 | 60 | 70 | 80 |
| | PP fiber | 25 | 25 | 15 | 15 | 35 | 55 | 65 | 20 | 20 | 20 | | |
| | PE/PP composite fiber | 15 | | 15 | | 15 | 15 | 15 | 6 | 6 | 6 | 30 | 20 |
| | MAPE/PP composite fiber | | 15 | | 15 | | | | | | | | |
| | PE powder | | | | | | | | 14 | 14 | 14 | | |
| Fiber aggregate | Bulk specific gravity [g/mL] | 0.062 | 0.057 | 0.057 | 0.061 | 0.061 | 0.061 | 0.060 | 0.057 | 0.057 | 0.057 | 0.061 | 0.063 |
| | Thickness [mm] | 8.9 | 10.3 | 10.1 | 9.1 | 9.1 | 9.3 | 9.4 | 10.1 | 10.1 | 10.1 | 9.9 | 9.5 |
| | Tensile strength in first direction T [MPa] | 0.119 | 0.169 | 0.135 | 0.185 | 0.112 | 0.105 | 0.103 | 0.135 | 0.135 | 0.135 | 0.135 | 0.136 |
| | Tensile strength in second direction Y [MPa] | 0.102 | 0.127 | 0.125 | 0.153 | 0.100 | 0.099 | 0.097 | 0.125 | 0.125 | 0.125 | 0.125 | 0.129 |
| | T/Y | 1.18 | 1.34 | 1.07 | 1.21 | 1.12 | 1.06 | 1.06 | 1.07 | 1.07 | 1.07 | 1.08 | 1.05 |
| | Content of thermal fusion bonding resin component [%] | 7.5 | 7.5 | 7.5 | 7.5 | 7.5 | 7.5 | 7.5 | 17.0 | 17.0 | 17.0 | 15.0 | 10.0 |
| | Appearance of fiber aggregate | A | A | A | A | A | A | A | B | B | B | B | B |
| Molded article | Thickness of molded article [mm] | 2 | 2 | 2 | 2 | 2 | 2 | 2 | 2 | 2 | 2 | 2 | 2 |
| | Density [g/cm³] | 1.12 | 1.11 | 1.17 | 1.18 | 1.17 | 1.15 | 1.12 | 1.18 | 1.18 | 1.21 | 1.08 | 1.00 |
| | Flexural modulus [GPa] | 3.1 | 3.7 | 3.5 | 4.1 | 2.9 | 2.8 | 2.3 | 3.8 | 4.7 | 4.8 | 2.0 | 1.7 |
| | Bending strength [MPa] | 37.0 | 61.0 | 40.0 | 65.0 | 39.0 | 33.0 | 32.0 | 47.0 | 47.0 | 45.0 | 30.0 | 18.0 |
| | Charpy impact strength [kJ/m²] | 38 | 16 | 27 | 14 | 31 | 18 | 14 | 9 | 15 | 18 | 8 | 6 |
| | Appearance of molded article | A | A | A | A | A | A | A | B | B | B | B | B |

**Table 1-2**

| | | Comparative Example | | | | | |
|---|---|---|---|---|---|---|---|
| | | 1 | 2 | 3 | 4 | 5 | 6 |
| Molding method | | Press | Press | Press | Press | Press | Press |
| Composition [mass%] | Pulp fiber | 73 | 63 | 60 | 50 | 30 | 30 |
| | PP fiber | 23 | 33 | 0 | 0 | 0 | 70* |
| | PE/PP composite fiber | 4 | 4 | 40 | 50 | 70 | 0 |
| Fiber aggregate | Bulk specific gravity [g/mL] | 0.042 | 0.041 | 0.063 | 0.061 | 0.061 | - |
| | Thickness [mm] | 14.3 | 14.6 | 9.5 | 9.9 | 9.9 | - |
| | Tensile strength in first direction T [MPa] | Unmeasurable | Unmeasurable | 0.120 | 0.113 | 0.106 | - |
| | Tensile strength in second direction Y [MPa] | Unmeasurable | Unmeasurable | 0.115 | 0.100 | 0.099 | - |
| | T/Y | Unmeasurable | Unmeasurable | 1.04 | 1.13 | 1.07 | - |
| | Content of thermal fusion bonding resin component [%] | 2.0 | 2.0 | 20.0 | 25.0 | 35.0 | - |
| | Appearance of fiber aggregate | D | D | C | D | D | - |
| Molded article | Thickness of molded article [mm] | - | - | 2 | 2 | 2 | 2 |
| | Density [g/cm³] | - | - | 1.20 | 1.18 | 1.15 | 0.98 |
| | Flexural modulus [GPa] | - | - | 5.2 | 3.5 | 2.9 | 3.4 |
| | Bending strength [MPa] | - | - | 40.0 | 41.0 | 35.0 | 87.0 |
| | Charpy impact strength [kJ/m²] | - | - | 25 | 24 | 14 | 4.4 |
| | Appearance of molded article | - | - | C | D | D | B |

| | | | | | | | |
|---|---|---|---|---|---|---|---|
| *: PP resin | | | | | | | |

**Table 1-3**

| | | Example 13 |
|---|---|---|
| Molding method | | Press |
| Composition [mass%] | Pulp fiber | 60 |
| | PP fiber | 25 |
| | PE/PP composite fiber | 15 |
| Lamination of CNF sheet onto both outermost layer surfaces (g/m²) | | 360 |
| Molded article | Thickness of molded article [mm] | 2.5 |
| | Density [g/cm³] | 1.15 |
| | Flexural modulus [GPa] | 7.1 |
| | Bending strength [MPa] | 85.0 |
| | Charpy impact strength [kJ/m²] | 24 |

**Table 2**

| | | Reference Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Molding method | | Press | Press | Press | Press | Press | Press | Press | Press | Press | Press | Press |
| Composition [mass%] | Pulp fiber | 60 | 60 | 60 | 60 | 60 | 60 | 60 | 60 | 60 | 60 | 60 |
| | Resin in place of PP fiber | 25 | 25 | 25 | 25 | 25 | 25 | 25 | 25 | 25 | 25 | 25 |
| | PE/PP composite fiber | 15 | 15 | 15 | 15 | 15 | 15 | 15 | 15 | 15 | 15 | 15 |
| Fiber aggregate | Bulk specific gravity [g/mL] | 0.056 | 0.058 | 0.060 | 0.062 | 0.060 | 0.065 | 0.061 | 0.064 | 0.059 | 0.064 | 0.060 |
| | Thickness [mm] | 10.1 | 10.0 | 10.0 | 10.5 | 10.9 | 10.9 | 10.6 | 10.3 | 10.7 | 10.9 | 10.3 |
| | Tensile strength in first direction T [MPa] | 0.154 | 0.152 | 0.162 | 0.129 | 0.191 | 0.153 | 0.158 | 0.154 | 0.166 | 0.105 | 0.147 |
| | Tensile strength in second direction Y [MPa] | 0.142 | 0.114 | 0.155 | 0.101 | 0.188 | 0.145 | 0.135 | 0.127 | 0.151 | 0.100 | 0.136 |
| | T/Y | 1.08 | 1.33 | 1.05 | 1.28 | 1.02 | 1.06 | 1.17 | 1.21 | 1.10 | 1.05 | 1.08 |
| Molded article | Thickness of molded article [mm] | 2 | 2 | 2 | 2 | 2 | 2 | 2 | 2 | 2 | 2 | 2 |
| | Density [g/cm³] | 1.30 | 1.23 | 1.24 | 1.25 | 1.32 | 1.27 | 1.26 | 1.33 | 1.28 | 1.29 | 1.29 |
| | Flexural modulus [GPa] | 3.1 | 2.0 | 1.8 | 4.1 | 1.8 | 3.3 | 2.2 | 2.6 | 1.9 | 4.1 | 3.1 |
| | Bending strength [MPa] | 37.0 | 21.0 | 19.0 | 44.0 | 19.0 | 39.0 | 27.0 | 28.0 | 20.0 | 44.0 | 37.0 |
| | Charpy impact strength [kJ/m²] | 26 | 7 | 6 | 14 | 6 | 8 | 11 | 9 | 15 | 14 | 31 |

As shown in Examples 1 to 13, the molded articles produced with the use of the fiber aggregates of the present invention were excellent in the flexural modulus and the strength, were excellent in the stiffness and strength against bending, and were further excellent in the impact resistance. Furthermore, the fiber aggregate and the molded article were excellent also in appearance.

On the other hand, in Comparative Example 1 and Comparative Example 2 in which the content of the thermal fusion bonding resin component in the fiber aggregate was less than 3% by mass, the fiber aggregate could not be formed. In the fiber aggregates of Comparative Examples 3 to 5 in which the content of the thermal fusion bonding resin component in the fiber aggregate exceeded 18% by mass, the appearance of the fiber aggregate became poor due to the thermal shrinkage at the time of the production of the fiber aggregate, and also in the molded article obtained from such a fiber aggregate, the appearance was poor. Furthermore, the molded article of Comparative Example 6 in which pulp fibers were directly melted and kneaded did not provide sufficient impact resistance.

### Reference Signs List

- 1: web forming apparatus
- 10: conveyor
- 20: air-permeable endless belt
- 30: fiber mixture supply means
- 40: first carrier sheet supply means
- 41: first carrier sheet
- 50: second carrier sheet supply means
- 51: second carrier sheet
- A: air-laid web

## Claims

1. A fiber aggregate for molding, comprising a fiber component and a thermal fusion bonding resin component, wherein
the fiber component contains a pulp fiber and a polypropylene fiber;
the thermal fusion bonding resin component contains at least one selected from the group consisting of polyethylene and acid-modified polyethylene;
a content of the thermal fusion bonding resin component in the fiber aggregate is 3% by mass or more and 18% by mass or less; and
when T represents a tensile strength of the fiber aggregate in a first direction, and Y represents a tensile strength of the fiber aggregate in a second direction perpendicular to the first direction, a T/Y ratio is 0.5 or larger and 1.5 or smaller.

2. The fiber aggregate for molding according to claim 1, wherein
the polypropylene fiber contains a polypropylene fiber having an average fiber diameter of 1 µm or larger and 16 µm or smaller and a polypropylene fiber having an average fiber diameter of larger than 16 µm and 50 µm or smaller.

3. The fiber aggregate for molding according to claim 1 or 2, wherein
a fiber length of the polypropylene fiber is 0.1 mm or longer and 50 mm or shorter.

4. The fiber aggregate for molding according to any one of claims 1 to 3, wherein
a bulk specific gravity is 0.04 g/mL or larger and smaller than 0.15 g/mL.

5. The fiber aggregate for molding according to any one of claims 1 to 4, wherein
a bulk specific gravity is 0.15 g/mL or larger and 0.50 g/mL or smaller.

6. The fiber aggregate for molding according to any one of claims 1 to 5, wherein
a content of the pulp fiber in the fiber aggregate is 10% by mass or more and 90% by mass or less.

7. A pre-sheet comprising: the fiber aggregate for molding according to any one of claims 1 to 6; and a fibrous cellulose-containing layer laminated on the fiber aggregate for molding.

8. A molded article formed by molding of the fiber aggregate according to any one of claims 1 to 6.

9. The molded article according to claim 8, wherein the molded article is selected from the group consisting of a hot-press molded article, an injection molded article, a compression molded article, a hand lay-up molded article, a wet vacuum molded article, and a molded article by a vacuum impregnation method (VaRTM molding), each of the fiber aggregate for molding.

10. The molded article according to claim 8 or 9, wherein a density is 0.8 g/cm³ or larger and 1.5 g/cm³ or smaller.

11. The molded article according to any one of claims 8 to 10, wherein a thickness is 2 mm or thicker.

12. The molded article according to any one of claims 8 to 11, wherein a flexural modulus is 2.5 GPa or larger, which is measured in accordance with JIS K7171: 2016.

13. The molded article according to any one of claims 8 to 12, wherein a Charpy impact strength measured in accordance with JIS K7111-1: 2012 is 2.0 kJ/m² or larger.

## Patentansprüche

1. Ein Faseraggregat zum Formen, bestehend aus einer Faserkomponente und einer thermisch schmelzbaren Harzkomponente, wobei;
die Faserkomponente eine Zellstofffaser und eine Polypropylenfaser enthält;
die thermisch schmelzbare Harzkomponente mindestens einen Stoff aus der Gruppe Polyethylen und säuremodifiziertes Polyethylen enthält;
der Gehalt an thermisch schmelzbarer Harzkomponente im Faseraggregat bei einem Massenanteil ab 3% bis zu 18% liegt; und
wenn T die Zugfestigkeit des Faseraggregats in einer ersten Richtung und Y die Zugfestigkeit des Faseraggregats in einer zweiten Richtung senkrecht zur ersten Richtung bezeichnet, das T/Y-Verhältnis bei einem Wert ab 0,5 bis zu 1,5 liegt.

2. Das Faseraggregat nach Anspruch 1, wobei
die Polypropylenfaser eine Polypropylenfaser mit einem mittleren Faserdurchmesser ab 1 µm bis zu 16 µm sowie eine Polypropylenfaser mit einem mittleren Faserdurchmesser von über 16 µm bis zu 50 µm enthält.

3. Das Faseraggregat nach Anspruch 1 oder 2, wobei
die Polypropylenfaser eine Länge ab 0,1 mm bis zu 50 mm aufweist.

4. Das Faseraggregat nach einem der Ansprüche 1 bis 3, wobei
die Rohdichte ab 0,04 g/ml bis unter 0,15 g/ml beträgt

5. Das Faseraggregat nach einem der Ansprüche 1 bis 4, wobei
die Rohdichte ab 0,15 g/ml bis zu 0,50 g/ml beträgt.

6. Das Faseraggregat nach einem der Ansprüche 1 bis 5, wobei
der Gehalt an Zellstofffasern im Faseraggregat bei einem Massenanteil ab 10% bis zu 90% liegt.

7. Eine Vorfolie, umfassend: das Faseraggregat nach einem der Ansprüche 1 bis 6; und eine auf das Faseraggregat laminierte faserige, zellulosehaltige Schicht.

8. Ein Formteil, das durch Formen des Faseraggregats nach einem der Ansprüche 1 bis 6 hergestellt wurde.

9. Das Formteil nach Anspruch 8, wobei das Formteil ausgewählt ist aus der Gruppe bestehend aus einem Heißpressformteil, einem Spritzgussformteil, einem Formpressteil, einem Handlaminatformteil, einem Nassvakuumformteil und einem durch ein Vakuumimprägnierungsverfahren (VaRTM-Formung) hergestellten Formteil, wobei jedes der Formteile aus dem Faseraggregat besteht.

10. Das Formteil nach Anspruch 8 oder 9, wobei die Dichte ab 0,8 g/cm3 bis zu 1,5 g/cm³ beträgt.

11. Das Formteil nach einem der Ansprüche 8 bis 10, wobei die Dicke 2 mm oder mehr beträgt.

12. Das Formteil nach einem der Ansprüche 8 bis 11, wobei der Biegemodul 2,5 GPa oder mehr beträgt und gemäß JIS K7171:2016 gemessen wird.

13. Das Formteil nach einem der Ansprüche 8 bis 12, wobei die Charpy-Schlagzähigkeit gemäß JIS K7111-1:2012 2,0 kJ/m² oder mehr beträgt.

## Revendications

1. Agrégat de fibres destiné au moulage, comprenant un composant fibreux et un composant de résine de liaison par fusion thermique, dans lequel :
le composant fibreux contient une fibre de pâte à papier et une fibre de polypropylène ;
le composant de résine de liaison par fusion thermique contient au moins un élément choisi parmi le groupe constitué du polyéthylène et du polyéthylène modifié par un acide ;
la teneur en composant de résine de liaison par fusion thermique dans l'agrégat de fibres est comprise entre 3 % en masse et 18 % en masse ; et
lorsque T représente la résistance à la traction de l'agrégat de fibres dans une première direction, et Y représente la résistance à la traction de l'agrégat de fibres dans une deuxième direction perpendiculaire à la première direction, le rapport T/Y est compris entre 0,5 et 1,5.

2. Agrégat de fibres pour moulage selon la revendication 1, dans lequel :
l'agrégat de fibres de polypropylène comprend une fibre de polypropylène ayant un diamètre moyen compris entre 1 µm et 16 µm et une fibre de polypropylène ayant un diamètre moyen supérieur à 16 µm et inférieur ou égal à 50 µm.

3. Agrégat de fibres pour moulage selon la revendication 1 ou 2, dans lequel :
la longueur des fibres de polypropylène est comprise entre 0,1 mm et 50 mm.

4. Agrégat de fibres destiné au moulage selon l'une quelconque des revendications 1 à 3, dans lequel :
la masse volumique apparente est comprise entre 0,04 g/ml et 0,15 g/ml.

5. Agrégat de fibres destiné au moulage selon l'une quelconque des revendications 1 à 4, dans lequel :
la masse volumique apparente est comprise entre 0,15 g/ml et 0,50 g/ml.

6. Agrégat de fibres destiné au moulage selon l'une quelconque des revendications 1 à 5, dans lequel :
la teneur en fibres de pâte de l'agrégat de fibres est comprise entre 10 % et 90 % en masse.

7. Une préforme comprenant : l'agrégat de fibres destiné au moulage selon l'une quelconque des revendications 1 à 6 ; et une couche fibreuse contenant de la cellulose stratifiée sur l'agrégat de fibres destiné au moulage.

8. Article moulé obtenu par moulage de l'agrégat de fibres selon l'une quelconque des revendications 1 à 6.

9. Article moulé selon la revendication 8, **caractérisé en ce que** l'article moulé est choisi parmi le groupe comprenant un article moulé par pressage à chaud, un article moulé par injection, un article moulé par compression, un article moulé par stratification manuelle, un article moulé par moulage sous vide humide et un article moulé par un procédé d'imprégnation sous vide (moulage VaRTM), chacun à partir d'un agrégat de fibres destiné au moulage.

10. Article moulé selon la revendication 8 ou 9, **caractérisé en ce que** sa densité est comprise entre 0,8 g/cm3 et 1,5 g/cm³.

11. Article moulé selon l'une quelconque des revendications 8 à 10, **caractérisé en ce que** son épaisseur est de 2 mm ou plus.

12. Article moulé selon l'une quelconque des revendications 8 à 11, dans lequel le module de flexion est égal ou supérieur à 2,5 GPa, mesuré conformément à la norme JIS K7171:2016.

13. Article moulé selon l'une quelconque des revendications 8 à 12, dans lequel la résistance au choc Charpy, mesurée conformément à la norme JIS K7111-1:2012, est égale ou supérieure à 2,0 kJ/m².
